(19)

Europäisches Patentamt

European Patent Office

Office européen des brevets

(11) **EP 4 721 909 A2**

(12) **EUROPEAN PATENT APPLICATION**

(43) Date of publication:
08.04.2026 Bulletin 2026/15

(21) Application number: 26159494.9

(22) Date of filing: 21.06.2023

(51) International Patent Classification (IPC):
**B23K 26/06** (2014.01)

(52) Cooperative Patent Classification (CPC):
**G01B 9/0209; B23K 26/032; B23K 26/046; B23K 26/048; B23K 26/0643; G01B 9/02063; G01B 9/02064;** G01B 2290/35

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **24.06.2022 EP 22181092**

(62) Document number(s) of the earlier application(s) in accordance with Art. 76 EPC:
**23733379.4 / 4 483 129**

(71) Applicant: **Raylase GmbH
82234 Wessling (DE)**

(72) Inventor: **GHADIMI, Reza
82229 Seefeld (DE)**

(74) Representative: **Araujo Edo, Mario
Boehmert & Boehmert
Anwaltspartnerschaft mbB
Pettenkoferstraße 22
80336 München (DE)**

<u>Remarks:</u>
This application was filed on 19.02.2026 as a divisional application to the application mentioned under INID code 62.

(54) **MEASURING MODULE WITH ADJUSTABLE PATH LENGTH DIFFERENCE AND WITH FOCUSING DEVICE FOR LASER PROCESSING APPARATUS**

(57)     The invention refers to a measurement module (10) for a laser processing apparatus (1) in which a first optical path (P1) and a second optical path (P2) are defined for laser light within a housing (11). The first optical path (P1) has a fixed predefined optical path length. The second optical path (P2) is defined between a connection port (12) of the housing and a coupling port (14) and has a variable optical path length adjustable by an optical path length regulator system (20). The invention further refers to an interferometer system comprising a measurement module with a first optical path (P1) corresponding to a reference arm of the interferometer system and with a second optical path (P2) corresponding to an object arm of the interferometer system, wherein an optical path length regulator system (20) is configured for adjusting an optical path length of the second optical path (P2), i.e., of the object arm of the interferometer system. The measurement module (10) further comprises a focusing device (18) arranged in the second optical path (P2) between the connection port (12) and the optical path length regulator system (20) and configured for focusing the laser light transmitted through the second optical path (P2). The invention further refers to a laser processing apparatus (1) comprising a laser processing module (30) for laser-processing a workpiece (P) on a work field (37) using a work beam (W) and a measurement module (10) according to the invention.

**Fig. 3**

EP 4 721 909 A2

## Description

FIELD OF THE INVENTION

The present invention is in the field of applied optics and laser processing. In particular, the invention regards a measuring module and an interferometer system usable with a laser processing module as an adjustable optical subsystem for directing a measurement beam to a detection device configured to measure distances, in particular distances between the laser processing module or the deflection unit thereof and the surface of a workpiece being laser-processed, within a broad range of measurable distances. The invention also regards a laser processing module comprising such a measuring module.

BACKGOUND OF THE INVENTION

The use of lasers is nowadays ubiquitous in the material-processing industry. Relevant examples are additive manufacturing (AM), 3d-printing, welding, cutting, marking, or engraving of different materials such as metals or polymers.

In laser-processing techniques, a work laser beam is scanned over a surface of material to be laser-processed using a deflection system, for example an XY pair of rotatable mirrors operated by corresponding galvanometer motors. The rotatable mirrors can be used for directing the work laser beam to a desired target position of the surface to be laser-processed so as to laser-process the material in a controlled manner.

In such techniques, it is generally desired to keep the focus of the work laser beam on the surface to be laser-processed in order to ensure a high material quality of the final product. Uncontrolled variations in the focus position may be related, for example, to uncontrolled variations in the amount of laser energy transmitted to the material in a given target position, which may lead to undesired irregularities in the final product, for example when welding, 3d-printing or cutting a piece of material.

Known solutions for keeping the focus of a laser processing module on the target surface, i.e. on the corresponding work field, are for example the use of f-theta-lenses, as in KR 2012 0114651 A, and the use of a focusing system with variable focal length, for example by means of a movable lens integrated within the system and configured for shifting a position of the focus of the work laser beam, as for example in US 2014/0263221 A1.

The use of f-theta-lenses allows focusing a collimated the work beam on the work field (the target surface) without using movable optical components. However, this comes with a very limited range of possible work distances between the deflection system and the work field and hence with a correspondingly limited range of possible work field sizes. Further, f-theta-lenses are costly optical components.

The use of adjustable focusing systems for continuously setting the focal position of the work beam overcomes some of the disadvantages of f-theta-lenses. An adjustable focusing system may reach a broader range of available work distances and hence of possible work field sizes as compared to an f-theta-lens.

However, the use of adjustable focusing systems also poses technical challenges. As the deflection system operates to scan the work laser beam over the surface being laser-processed, a real optical distance between the deflection system and the surface may vary. For example, depending on the settings of the deflection system, in particular depending on a deflection angle, said real optical distance may vary in the case of a planar surface to be laser-processed. Accordingly, pre-set settings of the adjustable focusing system may be stored in advance for corresponding settings of the deflection system, for example in a look-up table format, in order to dynamically adjust the focal length of the focusing system as the deflection system scans the planar work surface.

As a further example, even for a given work distance between the deflection system and the work surface and for a given deflection angle, the actual distance between the deflection system and a point on the work surface may be subject to uncontrolled variability, for example due to irregularities of the work surface itself, such as a misorientation of the work surface or uncontrolled variations in a height-profile thereof.

Therefore, in order to keep track of such irregularities and to correspondingly react by controlling the adjustable focusing system to compensate them, it may be important to implement a continuous distance detection. Thus, some optical path length regulator systems include detection systems configured for measuring distances in real-time, for example based on triangulation, time-of-flight distance measurement, or chromatic-confocal distance measurement. However, such distance measurement techniques are generally not suitable for being integrated in an on-axis (coaxial) configuration, in particular for large working distances.

However, the detection system may be subject to the same sources of variability and error to which the work laser beam itself is subject, which may cause an inaccurate and unreliable distance determination and, consequently, an inaccurate correction of the focus position of the work laser and hence poor laser quality.

One known possibility for implementing an adaptable distance measurement system is based on the use of optical coherent tomography (OCT). An example of the use of OCT for distance detection in an optical path length regulator system with an adjustable focusing system is described in DE 10 2013 008 269 A and in US 2016/059347 A1. An optical coherent tomograph is integrated in a laser processing apparatus and is configured for performing distance measurements based on an interference between laser light forming a measurement beam propagating along an object arm path and reflected at the work surface and a reference beam obtained from the same laser light and propagating along a reference arm path. The adjustable focusing system sets a focal position both for a work beam and for the measurement beam. The system includes an optical path length regulator system configured for adapting a variable optical path length of the reference arm path depending on a variation of the focal position under the control of a control unit, such that an optical path length difference between the object arm path, which depends on the focal position, and the reference arm path, which is adjustable, remains within a coherence length of the optical coherent tomograph after each variation of the focal position. The control unit is however not configured to control an optical path length of the object arm path in real time.

However, OCT-devices are very costly pieces of optical equipment and their integration in an existing optical path length regulator system may be highly complex. In particular, the OCT-device described in DE 10 2013 008 269 A poses some requirements on the laser processing system in which it should be incorporated, for example regarding the settings and characteristics of the focusing system, which should also be usable by the measurement light on which the OCT-device is to base its measurements. In general, this system has the technical limitation that any optical elements that interact both with the measurement beam and with a laser processing beam must be correspondingly configured, for example regarding their coatings, for being compatible with two different wavelength ranges, which typically lead to non-optimal operating conditions. Further, the OCT-device described in DE 10 2013 008 269 A has a limited optical path length adaptability range. Only optical path length variations from about 20 mm to about 200 mm may be compensated according to this document.

DE 10 2019 001858 B3 describes an interferometric optical measurement device with an optical path length variator for adjusting an optical path length of a reference arm and of an object arm. A deflection head of the device only deflects a measurement beam, but a working beam.

The use of an interferometer as a distance detector for a laser processing device in a non-adaptative manner is also known from US 2020/0038954 A1.

US 2015/0230705 A1 describes an interferometric ophthalmologic apparatus with an adjustable object arm and a fixed reference arm.

Other optical devices are known from US 2006/165350 A1 and US 2017/276471A1.

Thus, there is room for technical improvement in the field of distance measurement in laser-processing systems.

SUMMARY OF THE INVENTION

The present invention aims at overcoming the previously mentioned disadvantages of the prior art, in particular by providing a measurement module allowing a detection system of a laser processing apparatus to implement an accurate and reliable continuous distance determination, able to account for and compensate different sources of distance variability. This problem is solved by a measurement module according to claim 1, by an interferometer system according to claim 13, and by a laser processing apparatus according to claim 14, which comprises such a measurement module. Preferred embodiments of the invention are defined in the appended dependent claims.

A first aspect of the invention refers to a measurement module for a laser processing apparatus. The laser processing apparatus may comprise a laser processing module for laser-processing a workpiece on a work field, for example an AM-module, and the measurement module. The measurement module may be optically and mechanically couplable with the laser processing module, although both modules may be structurally independent. The laser processing module may correspond to a part of the laser processing apparatus in which laser light is generated/inputted and optically configured for laser-processing the workpiece on the work field, while the measurement module may correspond to a part of the laser processing apparatus in which laser light is generated/inputted and outputted and optically configured for performing laser-based distance measurements, which may be used by the laser processing apparatus, for example for correctly focusing a work beam on the work field and/or on the workpiece. This modular configuration may allow integrating the measurement module according to the invention in different laser processing modules and vice versa.

The measurement module comprises a housing. The housing comprises a connection port, possibly a single connection port. The connection port is configured for optically coupling the measurement module to a distance detection device. In particular, the connection port may be configured for receiving and outputting laser light from and to the distance detection device, which may include or be optically couplable to an interference sensor, such that the measurement module and the distance detection device may implement an interferometer, in particular for performing interferometric distance detection.

The laser light inputted from and/or outputted to the distance detection device may be laser light suitable for performing an interferometric measurement, in particular coherent laser light, preferably broadband low coherence light. The laser light inputted from and/or outputted to the distance detection device may be separable or separated in two parallel optical paths or arms for performing an interferometric measurement. The separation of the laser light into two separate optical paths may be performed outside the measurement module or inside the measurement module.

For example, if the separation of the laser light into two separate optical paths is performed outside the measurement module, the connection port may be configured for inputting and outputting the laser light via two corresponding optical paths, for example in the form of two separate light beams. If the separation of the laser light into two separate optical paths is performed in the measurement module, the connection port may be configured for inputting the laser light via one single optical path, for example in the form of a single light beam, and the measurement module may comprise an optical splitter for splitting the laser light into separate optical paths (interferometer arms). In the latter case, the connection port may be configured for outputting the laser light via two corresponding optical paths, for example in the form of two separate light beams.

The housing of the measurement module further comprises a coupling port for optically coupling the measurement module to a laser processing module of the laser processing apparatus. When the measurement module is optically coupled to the laser processing module via the coupling port, laser light may be transmitted from the measurement module into the laser processing module and vice versa through the coupling port, and through a corresponding further coupling port of the laser processing module. The measurement module may be mechanically attachable to the laser processing module for optically coupling the measurement module to the laser processing module.

In the measurement module of the invention, a first optical path and a second optical path are defined, at least in part within the housing, for the laser light received and outputted through the connection port. The first optical path and the second optical path may be completely contained within the housing. The first optical path and the second optical path may be independent and separate from each other and may in particular have no overlap or may have a partial overlap at portions thereof between the connection port and an optical splitter at which laser light received through the connection port may be split into the first optical path and the second optical path.

The first optical path is defined from the connection port to a reference optical reflector of the measurement module. The reference optical reflector reflects the laser light back to the connection port. The reference optical reflector may comprise any reflective optical component, in particular a mirror or a retroreflector, preferably a fixed (non-movable) mirror or retroreflector. The laser light received through the connection port may be directed through the first optical path to the reference optical reflector and reflected by the reference optical reflector back to the connection port through the first optical path. The reference optical reflector may be arranged at a predefined optical distance from the connection port to act as a reference for an interferometric measurement, wherein the laser light received and outputted through the connection port and reflected by the reference optical reflector covers the predefined optical distance from the connection port to the reference optical reflector and back in a corresponding predefined time, possibly through one or more correspondingly configured optical fibers. The previously mentioned predefined optical distance may then be determined by the one or more optical fibers through which laser light may propagate between the connection port and the reference optical reflector, for example by a length and/or a refraction index of the one or more optical fibers.

Thus, the first optical path may correspond to the so-called reference arm of an interferometer optical arrangement, in particular of an interferometer arrangement that may be formed by the measurement module and the previously mentioned distance detection device that may be optically coupled thereto.

The second optical path is defined from the connection port to the coupling port and back to the connection port. The laser light received through the connection port may be directed through the second optical path to the coupling port, from which it may be fed into a laser processing module to which the measuring module may be optically and possibly mechanically coupled. The laser light received in the laser processing module from the measurement module via the coupling port may be directed by the laser processing module to the work field and/or to a workpiece being laser-processed, where it may be reflected back. The laser processing module may then direct the reflected light back to the measurement module through the coupling port. The reflected light is then guided along the second optical path back to the connection port for being transmitted to a distance detection device that may be optically coupled to the connection port. The distance detection device may then perform an interferometric measurement to determine a distance based on the laser light received from the first optical path and from the second optical path.

The second optical path may correspond to the so-called object arm of an interferometer optical arrangement, in particular of the interferometer arrangement that may be formed by the measurement module and the previously mentioned distance detection device that may be optically coupled thereto.

The measurement module may be thought of as an intermediate optical path length regulator system optically arranged between a distance detection device and a laser processing module, wherein the distance detection device may be optically coupled with the laser processing system via the measurement module. Laser light received from the distance detection device and/or from a corresponding laser light source may enter the measurement module and be transmitted through the second optical path and the coupling port to the laser processing module, where it can be directed to the work field thereof and/or a workpiece being laser-processed. The laser light reflected by the work field and/or by the workpiece can then be directed by the laser processing module and the measurement module back to the distance detection device through the coupling port and the second optical path, for being used by the distance detection device for performing a distance measurement based on an interference thereof with the laser light reflected by the reference optical reflector.

The measurement module of the invention further comprises an optical path length regulator system configured for adjusting an optical path length difference between an optical path length of the first optical path and an optical path length of the second optical path.

The first optical path has a first optical path length and the second optical path has a second optical path length, which may be different from the first optical path length. The optical path length difference corresponds to a difference between the first optical path length and the second optical path length. Monitoring variations in this optical path length difference may allow determining distances based on an interferometric measurement using an interference between laser light received from the first optical path and laser light received from the second optical path, which may have been originally generated coherently with the laser light received from the first optical path. The way in which such interferometric distance determination can be performed is well known to the skilled person and is hence not explained in detail here.

An "optical path length" may be understood herein as referring to the product of unit of length times local refraction index integrated over a given optical path. In mathematical terms, the optical path length OPL may be expressed for a medium with constant refractive index n for a path with geometrical length s as:

$$OPL = n \cdot s.$$

For a medium with a refractive index variable over the length of the path, the OPL may be mathematically expressed as the path integral:

$$OPL = \int n(s) \cdot ds.$$

The optical path length regulator system is configured for controllably setting the optical path length difference, in particular by controllably modifying the optical path length of the second optical path, corresponding to the so-called "object arm". This may imply controllably setting and/or modifying a geometric path length (cf. s and ds in the above equations) of the second optical path and/or a refractive index of at least a portion of the second optical path (cf. n and n(s) in the above equations). For this purpose, the optical path length regulator system is integrated in the second optical path, which may act as the object arm of an interferometer arrangement formed by the measurement module and by the previously mentioned distance detection device that may be optically coupled to the connection port. In other words, the second optical path may partly extend along/-within the optical path length regulator system. For example, the optical path length regulator system may comprise a plurality of reflective and/or refractive optical elements, such as mirrors, lenses and/or prisms, at which the laser light transmitted through the second optical path may be reflected and/or refracted.

The optical path length regulator system may comprise a motion control unit specifically configured for controllably setting the optical path length difference by operating upon one or more optical elements, such as mirrors, lenses and/or prisms, of the optical path length regulator system, in particular by moving any of these elements or a combination thereof manually or automatically. For example, the motion control unit of the optical path length regulator system may be programmed to associate to each specific value of the optical path length difference, a corresponding setting of the one or more optical elements of the optical path length regulator system. For instance, for implementing an adjustment of the optical path length difference of 400 mm, the control unit of the optical path length regulator system may move the one or more optical elements thereof such as to modify the optical path length of the second optical path by 400 mm accordingly. This may in particular comprise shifting the one or more optical elements, in particular along a corresponding predefined shifting path, for example manually or automatically.

The previously mentioned variations in the optical path length difference, which may in particular be due to variations in an optical path length variation of a measurement beam transmitted along the second optical path being used for performing distance detection may be intended or unintended. An example of intended variations in the optical path length difference may correspond, in particular when laser-processing a workpiece on a planar work field, to a change in the settings of a deflection unit of the laser processing module used for scanning the measurement beam, in particular in the deflection angle. If a shortest distance between an optical center of the deflection unit being used for scanning the measurement beam over the work field, in particular an optical center of a movable mirror (e.g. an X- or Y-mirror) thereof closest to the work field, and the work field is a distance D, a variation ΔD in the distance D for a change in the deflection angle α corresponds, according to a simple trigonometric relation, to

$$\Delta D = \left(\frac{1-\cos\alpha}{\cos\alpha}\right) D.$$

As a consequence, if the deflection angle is varied by an angle α, the optical path of the measurement beam varies by 2ΔD. The optical path length regulator system may be used for compensating this variation by correspondingly varying the second optical path length by 2ΔD accordingly.

Examples of unintended variations in the optical path length difference may correspond to surface irregularities of a workpiece being processed, for example of an uppermost layer of workpiece being laser processed, or to a work field being incidentally tilted with respect to an originally intended horizontal plane.

An additional example of intended variations in the optical path length difference may correspond to intended variations in the "work distance", i.e., in a minimal (e.g., vertical) distance between the laser processing module, in particular of a housing thereof, and the corresponding work field. Such variations may for example take place when the distance between the laser processing module and the underlying work field is purposedly modified, for example to vary a size of the work field. In particular, the work distance may be increased for operating with a bigger work field and the work distance may be reduced for operating with a smaller work field.

According to the invention, the first optical path has a fixed predefined optical path length, which may be determined by the position of the reference optical reflector and/or by the properties of one or more optical fibers through which laser light may propagate between the connection port and the reference optical reflector, in particular by the lengths and/or refraction indices thereof. The second optical path has a variable optical path length, which is adjustable by the optical path length regulator system. The optical path length regulator system is hence configured to adjust the optical path length of the second optical path. Thus, the optical path length difference can be adjusted by the optical path length regulator system by correspondingly adjusting the optical path length of the second optical path while the optical path length of the first optical path remains constant.

Thus, the measurement module according to the invention allows, by virtue of the optical path length regulator system thereof, using the second optical path for transmitting a beam of laser light (a measurement beam) used for performing interferometric distance measurements with a corresponding distance detection device and reacting to variations in the optical path length of the second optical path (corresponding to the object arm of the interferometric arrangement) by correspondingly re-adjusting the optical path length of the second optical path such as to compensate such variations. As a result, an overall optical path length difference originally predetermined for the optical path length regulator system may remain substantially constant even after such variations occur.

The previously mentioned distance detection device may have a measurement range (also called "measurement depth") within which distances may be determined by the distance detection device with a predetermined precision. For example, the distance detection device may be configured to detect an optical path length difference equal to zero when an object is arranged at a position P and may be able to accurately determine variations in the position of the object within a detection range P$\pm\Delta$, wherein $\Delta$ may for example be from 4 mm to 15 mm. The ability to compensate variations in the optical path length difference, in particular to compensate the previously described "intended variations", may allow using the previously mentioned distance detection device, when optically coupled to the measurement module of the invention via the connection port, for performing interferometric distance measurements with the predetermined precision despite variations in an optical path length of the measurement beam. In absence of the optical path length regulator, such variations could cause the position of an object to exit the detection range, such that the predetermined precision would no longer be guaranteed. According to the invention, the measurement module allows compensating such variations by a corresponding variation of the second optical path, such that if for example an object moves from a position P1 to a position P2, with P2-P1> $\Delta$P, the second optical path can be correspondingly varied by a distance P2-P1 and, as a result, the position of the object is within the detection range P2$\pm\Delta$ and can be detected accurately within this range. In other words, when the optical path length difference is modified due to the previously described variations, in particular intendedly, the optical path length regulator system can be used for restoring the previous value of the optical path length difference and distance measurements can continue to be made accurately and reliably.

Advantageously, the measurement module according to the invention allows compensating variations in the overall optical path length difference of a measurement beam used for determining distances, possibly automatically, preferably continuously (i.e., not necessarily stepwise), without having to manipulate the interior of the measurement module and possibly without having to adjust the focal settings of a measurement beam transmitted through the measurement module, in particular through the second optical path thereof.

As compared to previous solutions known from the prior art, for example from DE 10 2013 008 269 A, which are based on adjusting an optical path length of the reference arm of an interferometric setup, the present invention allows combining two functions when the optical path length difference varies, 1) ensuring that the distance detection based on interference remains fully operational and does not loose accuracy, and 2) ensuring that the measurement beam remains focused, in the optical path length regulator system. When the second optical path undergoes a variation, for example for any of the previously discussed reasons, a corresponding adjustment implemented by the optical path length regulator system can simultaneously ensure that an initial optical path length difference on which an interferometric distance detection device may be based stays substantially constant while also ensuring, without having to modify the settings of any focusing system, that a focal position of the measuring beam also remains substantially unchanged.

For example, in the event that a work distance of a laser processing module to which the measurement module of the invention is optically coupled has to be modified, for example increased by 700 mm, the measurement module of the invention allows accounting for this by correspondingly operating the optical path length regulator system, for example by reducing the second optical path used by a measurement beam by 700 mm. As a result, an interferometric distance detection device connected to the measurement module can continue to operate without having to be reconfigured and there is also no need to reconfigure the focus settings for the measurement beam. In contrast, in the systems as the system known from DE 10 2013 008 269 A, it would be necessary to reconfigure the focusing settings of a corresponding focusing system and to separately implement an adjustment of the optical path length of the reference arm.

The housing of the measurement module may enclose at least some of the remaining components of the measurement module. The first optical path and the second optical path may be defined within the housing at least in part, possibly completely comprised within the housing. The optical path length regulator system may be completely enclosed by the housing. The connection port and/or the coupling port may be formed through the housing. The housing may be fluid-tight and/or dust-tight. Preferably, the housing may provide a degree of tightness according to IP64. The housing may comprise attachment means for mechanically attaching the measurement module to a laser processing module, in particular such that the laser processing module and the measurement module are optically coupled through the coupling port as explained below in further detail.

According to preferred embodiments, the optical path length regulator system may be configured for varying the optical path length of the second optical path by an optical path length variation within a range from 3 $\mu$m to 1200 mm, in particular from 10 $\mu$m or from 20 $\mu$m to 1200 mm, preferably from 40 $\mu$m to 750 mm. This may be achieved by a corresponding adjustment range of the optical path length regulator system, in particular of the optical elements thereof, such as the previously described pairs of reflection elements and/or pairs of refraction elements. The optical path length difference being adjustable within the aforementioned ranges allows compensating for variations in the optical path length of a measurement beam being propagated through the second optical path of the measurement module of the invention whenever such variations are within these ranges. In particular, variations in the optical path length of 200 mm or more, or 250 mm or more, of 500 mm or more or even of 700 mm or more, may be compensated by the optical path length regulator system.

The previously mentioned optical path length variation ranges include relatively small optical path length variation values, for example from 20 $\mu$m to 25 mm, preferably from 50 $\mu$m to 15 mm, medium optical path length variation values, for example from 25 mm to 200 mm, and relatively large optical path length variation values, for example from 200 mm to 1200 mm, preferably from 250 mm to 700 mm. The aforesaid relatively small values may for example correspond to adjustments of the optical path length of the second optical path in reaction to (intended) distance variations caused by relatively small variations in the deflection angle, for example of up to 25°, of a laser processing module to which the measurement module may be attached and/or to (unintended) irregularities in the work surface such as protuberances or a tilt. The aforesaid relatively medium values may for example correspond to adjustments of the optical path length of the second optical path in reaction to (intended) distance variations caused by relatively large variations in the deflection angle, for example of more than 25°, of a laser processing module to which the measurement module may be attached. The aforesaid relatively large values may for example correspond to adjustments of the optical path length of the second optical path in reaction to (intended) distance variations caused by variations in the work distance of a laser processing module to which the measurement module may be attached.

According to the invention, the measurement module further comprises a focusing device arranged in the second optical path, in particular between the connection port and the optical path length regulator system, although such focusing device may be optional in other related non-claimed aspects of the present disclosure. The focusing device is configured for focusing the laser light transmitted through the second optical path, corresponding for example to a measurement beam used for performing a distance measurement. This focusing device may preferably have a fixed focal length. For example, the focusing device may comprise one or more static lenses and no movable lenses, However, in other embodiments, the focusing device may have a variable focal length. For example, the focusing device may comprise one or more static lenses and one or more movable lenses, corresponding galvanometer motors for setting the position of each of the movable lenses, and a corresponding control unit for adjusting the focal length of the focusing device. The focusing device may then be or comprise a focusing device as described in WO 2018/078137 A1 of the applicant. The focusing device of the measurement module may be used for focusing a measurement beam transmitted through the second optical path on the work field and/or on the workpiece being laser-processed by a laser processing module of the laser processing apparatus, when the measurement module is optically coupled, and possibly mechanically attached, thereto. As previously mentioned, this may ensure an optimal signal-to-noise ratio of the measurement beam and hence an optimal measurement accuracy, even for big values of the deflection angle. Further, the focusing device may allow keeping a spot size of the measurement beam constant for all values of the deflection angle, even on a planar work field.

According to preferred embodiments, the optical path length regulator system may comprise a plurality of reflection elements for reflecting the laser light along the second optical path. The plurality of reflection elements may in particular comprise an even number of reflection elements. The reflection elements may be or comprise mirrors. The plurality of reflection elements may comprise at least two movable reflection elements, wherein the optical path length of the second optical path, in particular an extension or geometrical path length thereof, may be adjustable, in particular continually adjustable, by setting a position of the at least two movable reflection elements. "Continually" may refer herein to the possibility of setting the previously mentioned geometrical path length of the second optical path to any desired arbitrary value within a continuous value range. The at least two movable reflection elements may be configured for moving simultaneously and/or in the same direction, i.e., for being co-movable.

Preferably, the optical path length regulator system may comprise at least one pair of reflection elements for reflecting the laser light along the second optical path. An extension (i.e. a geometrical path length) of the second optical path between reflection elements of each of the at least one pair of reflection elements may be adjustable, in particular continually adjustable, by setting a relative position, in particular a separation distance, between the reflection elements of each of the at least one pair of reflection elements. The optical path length regulator system may hence be configured for adjusting the optical path length difference by correspondingly setting a relative position, in particular a separation distance, between the reflection elements of each of the at least one pair of reflection elements, thereby modifying the optical path length difference via a modification of the geometrical path length of the second optical path.

Notably, the overall number of reflection elements of the measurement module according to the invention may be even or odd, although the number of optical reflection elements of the optical path length regulator system may respectively be odd or even. In other words, the measurement module may comprise additional reflection elements, such as mirrors, at which a laser beam propagating through the second optical path may be reflected, which additional reflection elements may possibly be fixed (not movable) and/or may possibly not be part of any of the at least one pair of reflection elements previously mentioned. The measurement module may further comprise additional optical elements as part of the first optical path and/or of the second optical path, other than the aforementioned additional reflection elements, for example optical fibers through which laser light may propagate along the first optical path and/or the second optical path, correspondingly.

Preferably, each pair of reflection elements may comprise one movable reflection element movable in a direction corresponding to the second optical path. The other reflection element of each pair of reflection elements may be static. Thus, the optical path length difference may be adjusted by simply setting a position of the movable reflection element of each pair of reflection elements. Preferably, all movable reflection elements may be movable together, simultaneously and/or in the same direction, corresponding to the direction of the second optical path. The movable reflection elements may be movable parallel to each other, but not necessarily in the same plane. Different pairs of reflection elements may define different segments of the second optical path, which may in particular be mutually parallel and may possibly have the same length.

For the previously discussed embodiments, the reflection elements of each pair of reflection elements may have mutually parallel reflective surfaces.

In preferred embodiments, the optical path length regulator system may be configured for simultaneously and/or equally displacing two or more, preferably all, of the movable reflection elements. For example, optical path length regulator system may comprise two or more pairs of reflection elements, wherein an extension of the second optical path between reflection elements of each of the two or more pairs of reflection elements may be simultaneously adjustable by equally setting a separation distance between said reflection elements. For example, the optical path length regulator system may comprise a plurality of pairs of reflection elements arranged with respect to each other such as to define a corresponding plurality of parallel segments of the second optical path. Each of the two or more pairs of reflection elements may comprise a movable reflection element, which may be co-movable with the movable reflection elements of the remaining pairs of reflection elements. Accordingly, an overall variation in the optical path length difference, in particular in the optical path length of the second optical path, with a value 2X may be implemented by modifying a separation distance between the reflection elements of each of the two or more pairs of reflection elements by X/N, with N being the number of pairs of reflection elements. For the factor of 2, it must be born in mind that each path segment is covered twice by the corresponding light beam (once on the way towards the work field and once on the way back from the work field). For example, in the case of three pairs of reflection elements, the optical path length difference may be reduced by 900 mm, for example in reaction to an increase in the work distance by 450 mm, by reducing the separation distance between the reflection elements of each of the three pairs of reflection elements by 150 mm, for example by displacing one reflection element of each of the three pairs, together, by 150 mm.

In such arrangements of the reflection elements, reflection elements of a first pair of reflection elements forming a first segment of the second optical path therebetween may be arranged rotated 90°, respectively, with respect to reflection elements of a neighboring pair of reflection elements forming a second segment of the second optical path therebetween parallel to the first segment. Likewise, reflection elements of a third pair of reflection elements forming therebetween a third segment of the second optical path parallel to the first and second segments may be arranged rotated 90°, respectively, with respect to the reflection elements of the second pair of reflection elements and so forth.

According to the invention, the optical path length regulator system comprises at least one pair of tilted reflection elements, in particular one or two such pairs, each pair being configured for multiply reflecting the laser light along the second optical path at reflecting surfaces thereof, wherein the reflective surfaces of each of the reflection elements of each of the at least one pair of tilted reflection elements face each other and are angled with respect to each other, for example 5° to 20°, preferably 10° to 15°. An extension (geometrical path length) of the second optical path between tilted reflection elements of each of the at least one pair of mutually tilted reflection elements is adjustable by setting a relative position between said tilted reflection elements, preferably by moving one or both of said tilted reflection elements. Moving one or both of said tilted reflection elements may in particular comprise tilting or shifting said one or both of said tilted reflection elements. A pair of tilted reflection elements may refer herein to two reflection elements, for example mirrors, that may be arranged in front of each other forming an angle therebetween, i.e. not being parallel.

The two tilted reflection elements may in particular be symmetrically arranged with respect to an axis of symmetry arranged between both reflection elements. According to the invention, the two tilted reflection elements are angled such that a light beam mis reflected back and forth several times between the reflective surfaces of the two reflection elements, from a first reflection when the light beam is first incident upon one of the tilted reflection elements, to a last time the light beam is reflected by one of the tilted reflection elements.

Due to the two reflection elements of a pair of tilted reflection elements being angled with respect to each other, the laser light may be reflected a plurality of times between the two reflection elements of the pair back and forth from one of the reflection elements to the other and back between a first reflection and a last reflection of the laser light at the pair of tilted reflection elements. In particular, the two reflection elements of each pair of tilted reflection elements may be configured for reflecting a beam of laser light incident upon the pair 2, 4, 6, 8, 10 or more times at each reflective surface. Consequently, each single pair of tilted reflection elements may functionally operate as a plurality of the previously described pairs of reflection elements having pairwise parallel reflective surfaces. By moving one or both of the tilted reflection elements of the pair of tilted reflection elements with respect to the other, the distance that a light beam being multiply reflected by the pair of tilted reflection elements propagates through can be adjusted. This distance may for example be increased by increasing a separation distance between both tilted reflection elements or by increasing a relative angle between both tilted reflection elements. Conversely, a distance may be reduced by reducing the separation distance between both tilted reflection elements or by reducing the angle between both tilted reflection elements.

Due to the multiple reflections of the laser light between each two reflection elements of each pair of tilted reflection elements, a small movement of one of the reflection elements of a pair of tilted reflection elements may be sufficient for implementing a relatively large adjustment of the optical path length of the second optical path. For example, if the two reflection elements of a pair of tilted reflection elements are configured for reflecting a beam of laser light incident upon the pair 4 times at each reflective surface, an increase D in the distance between the two reflection elements of the pair may cause an increase in the optical path length of the second optical path of the order of k·D, where k may be, depending on the settings and/or on the direction of movement, an integer with a value from 4 to 12 or more.

In some preferred embodiments, the optical path length regulator system may comprise at least one pair of refraction elements configured for transmitting therethrough the laser light along the second optical path. An extension (i.e., a geometrical path length) of the second optical path through refraction elements of each of the at least one pair of refraction elements may be adjustable by setting a relative position of said refraction elements, in particular by shifting one or both of said refraction elements with respect to each other, preferably by shifting both of said refraction elements with respect to each other. By shifting both of said refraction elements with respect to each other, an uncontrolled shift in the direction of the measurement beam due to refraction at one of said refraction elements can be compensated and avoided.

By means of such refraction elements, the optical path length of the second optical path may be modified by modifying the refraction index (cf. n in the above equations for the OPL) of the medium through which light propagates along the second optical path. The refraction elements may comprise refractive optical elements such as lenses, prisms and/or wedges. For example, each pair of refraction elements may comprise two polygonal prisms arranged mutually adjacent by one of their external faces, which faces may in particular be arranged oblique with respect to the second optical path, such that an extension of the second optical path through the two refraction elements may be modified by shifting the refraction elements with respect to each other, thereby modifying a portion of the respective faces at which both refraction elements overlap. The refraction elements of the at least one pair of refraction elements may in particular have a refractive index greater than a refractive index of air (i.e., with n > 1) or higher than a refractive index of other portions of the second optical path.

In preferred embodiments of the invention, the measurement module may further comprise a distance detection device optically coupled to the connection port and configured for performing a distance detection based on an interference of the laser light received by the distance detection device from the first optical path with the laser light received by the distance detection device from the second optical path. The distance detection device may in particular include or be connectable to an interference sensor configured for detecting and analysing an interference of the laser light received from the first and second optical path.

The distance detection device and the measurement module may be structurally independent from each other. For example, each of the distance detection device and the measurement module may be enclosed by a corresponding housing.

In preferred embodiments of the invention, the measurement module may further comprise a monitoring port and an optical element, wherein the optical element may be configured for reflecting a first part of laser light propagating along the second optical path and for transmitting a second part of said laser light propagating along the second optical path, such that said first or second part is extracted from the second optical path and directed towards the monitoring port. Said laser light may correspond to a monitoring laser beam used for monitoring a laser processing performed by a laser processing module to which the measurement module may be coupled. The monitoring port may then be used for connecting an optical monitoring device to obtain information about a laser process being carried out with a laser processing module to which the measurement module of the invention may be connected as explained further below. The monitoring laser beam may be generated by the optical monitoring device and may copropagate with the measurement beam at least over a part of the second optical path. The optical element, which may in particular be or comprise a dichroic element, such as a dichroic filter, may correspond to one of the reflection elements of the measurement module, in particular to one of the reflection elements of the optical path length regulator system. The monitoring port and the optical element may be configured to extract said first or second part from the second optical path at a position of the second optical path between the optical path length regulator system and the connection port. For example, in embodiments comprising a focusing device arranged in the second optical path between the connection port and the optical path length regulator system, the monitoring port and the optical element may be configured to extract said first or second part from the second optical path at a position of the second optical path between the focusing device and the connection port. This allows extracting light for monitoring purposes in a manner that is not sensible to variations in the second optical path length, in particular to the previously mentioned intended and unintended variations.

As previously mentioned, the measurement module and the distance detection device may in combination implement an interferometer, wherein the first and second optical paths respectively correspond to the reference arm and the object arm of the interferometer. The distance detection device, in particular the interference sensor thereof, may be configured for detecting the interference of a laser beam corresponding to the reference arm with a laser beam corresponding to the object arm to perform distance detection based thereon in a manner that is known to the skilled person according to conventional interferometry techniques.

Accordingly, a second aspect of the invention refers to an interferometer system comprising a measurement module, a distance detection device and a coupling port. The measurement module may correspond to a measurement module according to any of the previously described embodiments of the first aspect of the invention and the distance detection device may correspond to a distance detection device according to the previously described embodiment.

In any case, the measurement module of the interferometer system according of the second aspect of the invention defines a first optical path corresponding to a reference arm of the interferometer system and a second optical path corresponding to an object arm of the interferometer system. The measurement module comprises an optical reflector arranged in the first optical path for reflecting back laser light received along the first optical path. Further, the measurement module comprises an optical path length regulator system configured for adjusting an optical path length of the second optical path, i.e., of the object arm of the interferometer system.

The coupling port of the interferometer system according of the second aspect of the invention is configured for optically coupling the second optical path with a laser processing module, in particular with a measurement beam path thereof, as explained in more detail above and below.

The distance detection device is configured for performing distance measurements based on an interference of laser light transmitted along the first optical path with laser light transmitted along the second optical path.

According to preferred embodiments, the measurement module may further comprise a beam rotation element arranged along the second optical path, preferably between the optical path length regulator system and the coupling port. The beam rotation element may be rotatable around an axis corresponding to an optical axis of the second optical path. The beam rotation element may be or comprise one or more rotatable wedge prisms. The beam rotation element may be configured for differently modifying an effective optical path length of the second optical path at different positions around the optical axis and/or around a perimeter of the beam rotation element. Consequently, the beam rotation element may allow rotating a laser beam propagating along the second optical path, in particular a measurement beam of a laser system comprising the laser module, around a central point corresponding to the optical axis, thereby implementing a seam-tracking functionality on a work field. The beam rotation element may be operated, for example, to analyze, using a measurement beam, a near surrounding of a point on a work field before and/or after using a work beam to laser-process said point, for example during a laser-welding process.

A third aspect of the invention refers to a laser processing apparatus comprising a laser processing module and a measurement module according to any of the embodiments of the first aspect of the invention described above. The laser processing module is configured for laser-processing a workpiece on a work field using a work beam. The work beam may be a laser beam independent from a laser being transmitted within the measurement module, in particular through the second optical path of the measurement module. The measurement module is optically coupled with the laser processing module by the coupling port thereof for receiving and outputting laser light from and to the laser processing module in the form of a measurement beam.

The laser processing module comprises an optical element for reflecting one of the work beam and the measurement beam and for transmitting therethrough the other one of the work beam and the measurement beam. For example, the optical element may be configured for reflecting light in a wavelength range corresponding to the work beam and for transmitting light in a wavelength range corresponding to the measurement beam. Alternatively, the optical element may be configured for transmitting light in a wavelength range corresponding to the work beam and for reflecting light in a wavelength range corresponding to the measurement beam. The optical element may for example comprise a dichroic element, such as a dichroic filter.

The measurement beam may correspond to light in the infrared part of the spectrum, in particular with wavelengths within the range of 700 nm to 1400 nm, preferably from 800 nm to 1000 nm, more preferably from 815 nm to 850 nm, for example 830 nm. The work beam may correspond to light in a wavelength range different from, possibly bigger or smaller than, the wavelength range corresponding to the measurement beam. Thus, the optical element of the laser processing module may be transmissive for a part of the spectrum, in particular of the infrared spectrum, while being reflective for the rest of the spectrum or at least for a part thereof. As a result, the measurement beam and the work beam may propagate separately on one side of the optical element, before being reflected at or transmitted through the optical element, while they may propagate along the same optical path on the other side of the optical element, after being reflected at or transmitted through the optical element.

The laser processing module further comprises a deflection unit configured for deflecting the work beam and the measurement beam to and from the workpiece and/or the work field. The deflection unit may for example comprise a pair of rotatably mirrors tiltable around mutually orthogonal axes, i.e., a so-called XY-scanning unit, possibly including corresponding galvanometers. The deflection unit may be configured for controllably scanning the measurement beam and the work beam over the work field, on which a workpiece being laser-processed by the laser processing module may be arranged.

Thedeflection unit may be arranged after the optical element along the optical paths of the measurement beam and the work beam. Thus, the work beam and the measurement beam may be deflected by the deflection unit towards a corresponding target point of the work field after being transmitted through or reflected at the optical element.

A work beam path and a measurement beam path are defined in the laser processing module for the work beam and the measurement beam, respectively. The work beam path is defined such that the work beam may be reflected/transmitted by the optical element towards the deflection unit and deflected by the deflection unit to the workpiece and/or the work field.

The measurement beam propagates in the measurement module along the second optical path of the measurement module. Further, the measurement beam path is defined such that the measurement beam propagates from the coupling port of the measurement module to the optical element and to the deflection unit and back to the coupling port, being transmitted/reflected by the optical element to and from the deflection unit, being deflected by the deflection unit to and from the workpiece and/or the work field and being reflected back at the workpiece and/or the work field. Thus, the measurement beam path and the second beam path may be thought of as different portions of an overall optical path over which the measurement beam propagates in the laser processing module and the measurement module, respectively.

Thus, the work beam first propagates from an input, at which the work beam may be fed into the laser processing module (or from a corresponding light source) to the optical element, at which the work beam is reflected or transmitted towards the deflection unit, which then deflects the work beam towards a corresponding target point on the workpiece and/or on the work field to laser-process a work material by transmitting thermal energy thereto.

The measurement beam corresponds to laser light that is fed into the measurement module through the connection port and propagates along the second optical path thereof, including through the optical path length regulator system, then into the laser processing module through the coupling port towards the optical element, at which the measurement beam is transmitted or reflected, respectively (if the work beam is reflected, the measurement beam may be transmitted and vice versa) towards the deflection unit, which deflects the measurement beam in the same direction as the work beam for performing a measurement, for example a distance measurement.

The work beam and the measurement beam hence have a common path between the optical element and the workpiece. At the point of the workpiece on which the measurement beam is incident, the measurement beam is reflected back towards the deflection unit at least in part, is then deflected back towards the optical element and transmitted or reflected, depending on the case, towards the coupling port, through which the measurement beam re-enters into the measurement module, propagates back along the second optical path and reaches the connection port to be transmitted to a detection device at which interference of the measurement beam with the laser light propagating along the first optical path of the measurement module can be analysed to perform distance detection.

Advantageously, the measurement module allows adapting an optical path length of the measurement beam in order to keep it substantially constant, for example at a predefined value, despite variations in an overall optical path length over which the measurement beam propagates, for example due to variations in the work distance of the laser processing module, wherein the work distance may be understood herein as a minimal/shortest distance between a housing of the laser processing module and the work field thereof. The technical advantages of a measurement module according to the first aspect of the invention are hence thereby exploited for a laser processing apparatus.

In preferred embodiments, the laser processing apparatus may further comprise the distance detection device described above for a measurement module according to the first aspect of the invention. The distance detection device may be optically coupled to the connection port of the measurement module and may be configured for determining, based on an interference of the measurement beam with laser light propagating in the measurement module along the first optical path, variations in a distance between the work field and/or workpiece and the deflection unit, in particular between an optical center of a mirror of the deflection unit closest to the work field and a position of the work field on which the measurement beam is incident. Additionally or alternatively, the distance detection device may be configured for determining said distance (in absolute or relative terms) based on an interference of the measurement beam with laser light propagating in the measurement module along the first optical path.

Determining the work distance may comprise determining an absolute value of the work distance, for example 700 mm. Determining a variation in the work distance may comprise determining a change in the work distance, for example a work distance variation of 300 mm when the work distance is increased from 700 mm to 1000 mm, a work distance variation of 2.6 mm to 7 mm due to a deflection angle variation of 5° (e.g., with respect to a 0° deflection angle at a work distance of 700 mm), or a distance variation of 50 $\mu$m to 10 mm due to a surface irregularity of an outermost surface of the work material of the workpiece being laser-processed. The distance detection device may be a component of the laser processing apparatus allowing to use the measurement beam transmitted through the measurement module for performing distance measurements, which may be subsequently used for correspondingly controlling the laser processing module and/or the measurement module.

A "control unit" as used herein may refer to a hardware-based or software-based unit, possibly including a processing unit, specifically configured to control a further entity or device as described herein. The control unit may for example be or be comprised in a control card or module, such as an SP-ICE control card.

The information gained by the distance detection device, in particular related to a distance or a distance variation, can be used for controlling the laser processing apparatus based thereon, for example for correctly focusing the work beam on the work field and/or on the workpiece taking into account real-time information about a real distance between the deflection unit of the laser processing apparatus and the work field and/or the workpiece.

According to preferred embodiments, the laser processing apparatus may further comprise a control unit configured for controlling the optical path length regulator system of the measurement module based on a variation in a work distance of the laser processing module. The work distance may refer herein to a minimal distance (possibly vertical) between the work field, in particular a centre thereof, and the laser processing module, for example a housing thereof. This distance variation may be detected by the previously mentioned distance detection device. However, this needs not be the case, since the variation in the work distance can also be otherwise detected, for example via direct communication with an adjustable table configurable at different heights for implementing different work distances or via a user-input.

The control unit or the further control unit may further be configured for compensating a variation in an optical path length of the measurement beam path due to said variation in the work distance by controlling the optical path length regulator system to correspondingly adjust the optical path length of the second optical path, for example by correspondingly moving one or more reflection elements and/or refraction elements of the optical path length regulator system. As a consequence of a variation in the work distance of the laser processing module, for example when the laser processing module is going to be used for a use different to a previous use, possibly requiring a different size of the work field, the work field may be closer or farther away from the laser processing module, which means that the optical path length of the measurement beam path may correspondingly be shorter or longer as compared to a situation before the variation in the work distance took place.

The control unit or the further control unit may be configured for controlling the optical path length regulator system to adjust the optical path length of the second optical path such as to compensate the change caused by a variation in the work distance. For example, if the work distance has been increased by an amount D, the control unit may control the optical path length regulator system to shorten the optical path length of the second optical path by an amount D. As a result, the optical path length of the measurement beam path may be substantially the same as before the variation in the work distance took place.

The control unit or a further control unit (different form the previously mentioned control unit) may further be configured for controlling the optical path length regulator system of the measurement module based on a variation in a deflection setting of the deflection unit of the laser processing module, for example based on a variation of a deflection angle. This distance variation may be detected by the previously mentioned distance detection device. However, this needs not be the case, since the variation in the deflection setting of the deflection unit of the laser processing module can also be otherwise detected, for example via direct communication with the deflection unit or via a user-input.

The control unit or the further control unit may further be configured for compensating a variation in an optical path length of the measurement beam path due to said variation in the deflection setting of the deflection unit by controlling the optical path length regulator system to correspondingly adjust the optical path length of the second optical path, for example by correspondingly moving one or more reflection elements and/or refraction elements of the optical path length regulator system. For example, as previously explained, if the deflection angle is increased to deflect the measurement beam and/or the work beam to a position on the work field farther away from the centre of the work field (corresponding to a 0° deflection angle), the optical path length of the measurement beam path is effectively increased (cf. formula provided above for $\Delta D$). The control unit or the further control unit may then be configured for controlling the optical path length regulator system of the measurement module to modify the optical path length of the second optical path in order to compensate for this variation, in the present exemplary case by correspondingly shortening the optical path length of the second optical path. As a result, the optical path length of the measurement beam path before the variation in the deflection setting of the deflection unit can be restored.

According to preferred embodiments, the control unit or a further control unit (different form the previously mentioned control unit) may be configured for controlling the optical path length regulator system of the measurement module based on a distance determined by the distance detection device and/or on a variation in a distance determined by the distance detection device. The control unit may allow adjusting the optical path length of the second optical path of the measurement module as a function of such distance and/or of such variation in a distance determined by the detection device. For example, the optical path length regulator system may be controlled based on the detection, by the distance detection device, of an irregularity/protrusion of the surface of the workpiece being laser-processed of 1 mm, to adjust the optical path length of the second optical path correspondingly by 1 mm.

According to preferred embodiments, the laser processing apparatus, in particular the laser processing module, may further comprise a work beam focusing device configured for focusing the work beam. Preferably, the work beam focusing device may be configured for focusing only the work beam, i.e. not the measurement beam, which may be focused according to the present invention by a dedicated focusing device comprised in the measurement module. Preferably, the measurement beam may not propagate through the work beam focusing device.

The work beam focusing device may have a variable focal length and may preferably be arranged in the work beam path between the optical element and a source or an input of the work beam, from which the work beam may originate. This means that the laser processing module may correspond to a pre-focusing laser processing module, for example similar to the one described in WO 2018/078137 A1. The previously described control unit (or further control unit) may be configured for controlling the pre-focusing device, possibly based on a distance and/or a variation in a distance determined by the distance detection device. Additionally or alternatively, the laser processing apparatus, in particular the laser processing module, may comprise an f-theta lens configured for focusing the work beam.

In preferred embodiments of the invention, the measuring module may comprise the focusing device described above for the measuring module of the first aspect of the invention, which may be configured for focusing the measuring beam on the work field and/or on the workpiece, in particular in a position corresponding to a focus of the work beam. By staying focused on the work field and/or on the workpiece, thanks to the focusing device and to the compensation allowed by the optical path length regulator system, the measurement beam allows performing distance measurements with optimised signal-to-noise ratio and with improved accuracy even for big values of the deflection angle.

According to preferred embodiments, the measurement beam may be formed by light in a wavelength range from 700 nm to 1400 nm, preferably from 800 nm to 1000 nm, more preferably from 815 nm to 850 nm, for example 830 nm. Further, the work beam may be formed by light in a wavelength range different from the wavelength range of the measurement beam, for example from 1000 nm to 1100 nm, possible using a YAG-Laser. However, the work beam may be formed by light in other wavelength ranges, such as from 500 nm to 550 nm.

In preferred embodiments, a minimal distance between the work field and the laser processing module, in particular a housing thereof (i.e. the work distance) may be variable within a range from 200 mm to 1200 mm, preferably from 250 mm to 750 mm, more preferably from 300 mm to 700 mm. As previously described, the optical path length regulator system of the measurement module may be configured to implement compensations of the optical path length of the measurement beam, which is transmitted along the second optical path, corresponding to these ranges.

A size of the work field associated to the laser processing module may be variable within a range from $200 \times 200$ mm$^2$ to $1400 \times 1400$ mm$^2$, in particular as a function of the work distance. The size of the work field may be proportional to the work distance. For example, a work field size of $250 \times 250$ mm$^2$ may be associated to a work distance of 250 mm, while a work distance of 1000 mm may be associated with a size of the work field of $850 \times 850$ mm$^2$. Notably, the work field may be square but this needs not be the case. According to other related embodiments, the work field may be rectangular, polygonal or circular.

In preferred embodiments of the invention, the measuring module may comprise the housing described above for the first aspect of the invention and the laser processing module may comprise a further housing enclosing at least some of the remaining components of the laser processing module. The work beam path and the measurement beam path may be defined within the housing of the laser processing module at least in part. In particular, the work beam path may be completely comprised within the housing of the laser processing module. The measurement beam may be partly comprised in the housing of the laser processing module and partly comprised in the housing of the measurement module, with the section of the measurement beam comprised in the housing of the measurement module corresponding to the second optical path of the measurement module.

A further coupling port connectable to the coupling port of the measurement module may be formed through the housing of the laser processing module. Preferably, the housing of the laser processing module may be fluid-tight and/or dust-tight, in particular according to IP64.

Preferably, the measuring module and the laser processing module may be mutually attachable, in particular mechanically. The housing of the measurement module may be attachable to the housing of the laser processing module, in particular such that the measurement module may be arrangeable adjacent to the laser processing module. When the laser processing module and the measurement module are mutually attached, the measurement module, in particular the second optical path, may be optically coupled with the laser processing module by means of the coupling port of the measurement module and of the (further) coupling port of the laser processing module.

BRIEF DESCRIPTION OF THE DRAWINGS

Fig. 1    shows a schematic view of a measurement module according to some embodiments of the invention including movable reflection elements.

Fig. 2    shows the measurement module of Fig. 1 after modifying a position of reflection elements thereof to modify an optical path length of the second optical path.

Fig. 3    shows a schematic view of a measurement module according to some embodiments of the invention including a movable refraction element.

Fig. 4    shows the measurement module of Fig. 3 after modifying a position of a refraction element thereof to modify an optical path length of the second optical path.

Fig. 5    shows a schematic view of a measurement module according to some embodiments of the invention including a pair of tilted reflection elements.

Fig. 6    shows a schematic view of a measurement module according to some embodiments of the invention including movable reflection elements and two pairs of tilted reflection elements.

Fig. 7    shows a schematic view of a laser processing apparatus according to embodiments of the invention including the measurement module of Figs. 3 and 4.

Fig. 8    shows another schematic view of a laser processing apparatus according to embodiments of the invention including the measurement module of Figs. 3 and 4.

Fig. 9    shows a schematic view of a laser processing apparatus according to embodiments of the invention.

Fig. 10   shows an embodiment of the measurement module of Fig. 3 including a beam rotation element.

Fig. 11   shows an embodiment of the laser processing apparatus of Fig. 9, including a beam rotation element.

DESCRIPTION OF PREFERRED EMBODIMENTS OF THE INVENTION

For the purposes of promoting an understanding of the principles of the invention, reference will now be made to specific preferred embodiments illustrated in the drawings, and specific language will be used to describe the same. It will nevertheless be understood that no limitation of the scope of the invention is thereby intended, such alterations and further modifications in the illustrated apparatus and such further applications of the principles of the invention as illustrated therein being contemplated as would normally occur now or in the future to someone skilled in the art to which the invention relates within the scope defined by the claims.

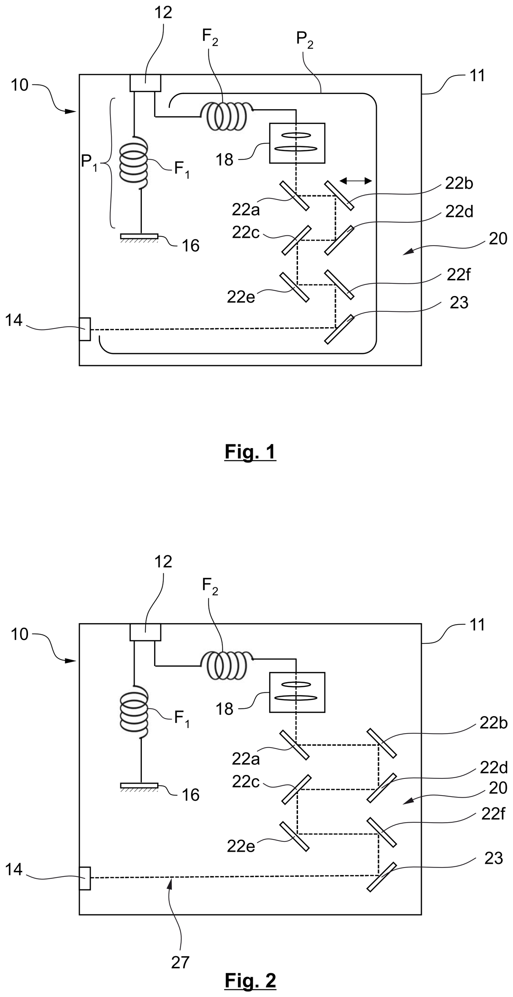

Fig. 1 shows a schematic view of a measurement module 10 according to an embodiment of the invention. The measurement module 10 comprises a housing 11 in which a connection port 12 and a coupling port 14 are formed. The connection port 12 allows optically coupling the measurement module 10 to a distance detection device. The coupling port 14 allows optically coupling the measurement module 10 to a laser processing module of a laser processing apparatus in which the measurement module 10 may be integrated.

The measurement module 10 defines a first optical path P1 and a second optical path P2 for laser light received and outputted through the connection port 12. The first optical path P1 and the second optical path P2 can be considered, respectively, as the reference arm and the object arm of an interferometric setup.

The first optical path P1 is defined between the connection port 12 and a reference optical reflector 16. The reference optical reflector 16 can for example be a fixed mirror configured for determining an optical path length of the first optical path according to a predefined value. In the embodiment shown in Fig. 1, the first optical path P1 comprises an optional optical fiber $F_1$, through which laser light inputted and outputted through the connection port 12 propagates to and from the reference optical reflectors 16, at which this laser light is reflected back. The first optical path P1 hence has a fixed optical path length.

The second optical path P2 is defined between the connection port 12 and the coupling port 14. Laser light received through the connection port 12 propagates from the connection port 12 to the coupling port 14 and back to the connection port 12 through the second optical path P2.

The measurement module 10 further comprises an optical path length regulator system 20. A portion of the second optical path P2 extends through the optical path length regulator system 20, which is configured for adjusting an optical path length of the second optical path P2. The second optical path P2 hence has a variable optical path length that is adjustable by the optical path length regulator system 20. By adjusting the optical path length of the second optical path P2, the optical path length regulator system 20 can adjust an optical path length difference between the fixed optical path length of the first optical path P1 and the variable optical path length of the second optical path P2 to thereby influence interferometric measurements performed using the first optical path P1 and the second optical path P2, respectively, as the reference arm and the object arm of an interferometric setup, in particular such that said difference can remain constant despite other sources of geometric or optic distance variability external with respect to the measurement module 10 and/or such that objects to be detected for distance measurement remain within a measurement range within which a distance detection device being used guarantees a predefined measurement precision.

In the embodiment shown in Fig. 1, the second optical path P2 comprises an optional optical fiber $F_2$, through which laser light inputted and outputted through the connection port 12 propagates between the connection port 12 and the optical path length regulator system 20. Further, the measurement module 10 comprises in the present exemplary embodiment a focusing device 18 arranged in the second optical path P2 between the connection port 12 and the optical path length regulator system 20 and configured for setting a focal position of a laser light beam propagating through the second optical path P2. The focusing device 18 preferably has a fixed focal length.

In the embodiment shown in Fig. 1, the optical path length regulator system 20 comprises three pairs of mirrors for reflecting the laser light along the second optical path P2. A first pair of mirrors 22a, 22b, a second pair of mirrors 22c, 22d, and a third pair of mirrors 22e, 22f, respectively define three mutually parallel portions of the second optical path P2. A first portion of the second optical path P2 extending between the mirrors 22a and 22b is parallel to a second portion of the second optical path P2 extending between the mirrors 22c and 22d and to a third portion of the second optical path P2 extending between the mirrors 22e and 22f.

The mirrors 22a-22f are arranged such that the reflective surfaces of the mirrors of each pair are mutually parallel and face each other, i.e. the reflection surfaces of the mirrors 22a and 22b are mutually parallel and face each other and so are the reflection surfaces of the mirrors 22c and 22d and of the mirrors 22e and 22f, wherein the reflection surfaces of the mirrors 22c and 22d are respectively rotated 90° clockwise with respect to the reflection surfaces of the mirrors 22a, 20b, and wherein the reflective surfaces of the mirrors 22e and 22f are oriented as the reflective surfaces of the mirrors 22a and 22b, respectively.

The measurement module 10 further comprises an additional mirror 23 configured for directing the second optical path P2 coming from the optical path length regulator system 20, in particular from the mirror 22F, towards the coupling port 14. In the embodiments of Fig. 1, a reflective surface of the mirror 23 is oriented as the reflective surface of the mirror 22d, such that the laser light propagating through the second optical path P2 continues to be directed to and from the coupling port 14 irrespectively of a position of the movable mirrors 22b, 22d, 22f and 23.

Each of the three pairs of mirrors of the measurement module 10 of the embodiment illustrated in Fig. 1 comprises a fixed mirror and a movable mirror. The position of the mirrors 22a, 22c and 22e are fixed, whereas the mirrors 22b, 22d, and 22f are movable with respect to the fixed mirrors 22a, 22c and 22e such as to adjust a respective distance between the corresponding fixed mirrors 22a, 22c and 22e and the corresponding movable mirrors 22b, 22d, and 22f. The mirror 23 is also movable. In the embodiment of Fig. 1, the movable mirrors 22b, 22d, 22f and 23 can be moved simultaneously and together, by a same distance, such that the mirrors of each of the three previously mentioned pairs of mirrors are arranged at the same mutual distance, wherein this distance can be decreased or increased selectively by correspondingly setting the position of the movable mirrors 22b, 22d, 22f and 23 in the horizontal direction.

If the movable mirrors 22b, 22d, 22f and 23 are moved away from the fixed mirrors 22a, 22c and 22e (e.g., horizontally to the right in the schematic view of Fig. 1), the optical path length of the second optical path P2 is increased. Instead, if the movable mirrors 22b, 22d, 22f and 23 are moved towards the fixed mirrors 22a, 22c and 22e (e.g., horizontally to the left in the schematic view of Fig. 1), the optical path length of the second optical path P2 is decreased. More specifically, in the exemplary embodiment of Fig. 1, if the movable mirrors 22b, 22d, 22f and 23 are moved away from the fixed mirrors 22a, 22c and 22e (e.g., horizontally to the right in the schematic view of Fig. 1) by a distance X, the optical path length of the second optical path P2 is increased by a distance 8D, since the distance increase D is counted twice for each of the movable mirrors 22b, 22d, 22f and 23 in view of the corresponding segment of the second optical path P2 and of the fact that light is transmitted both ways, from and to the connection port 12, along the second optical path P2.

Fig. 2 illustrates the state of the measurement module 10 of Fig. 1 after the movable mirrors 22b, 22d, 22f and 23 have been moved away from the fixed mirrors 22a, 22c and 22e with respect to that situation in Fig. 1 in order to increase the optical path length of the second optical path P2.

For any embodiments of the measurement module 10 of the present invention, the moving (e.g., shifting and/or tilting) of optical elements of the optical path length regulator system 20 can be implemented by a corresponding set of motor units (not shown in the drawings), possibly including galvanometers, configured for moving the optical elements of the optical path length regulator system 20, for example the movable mirrors 22b, 22d, 22f and 23 in the case of the embodiment illustrated in Figs. 1 and 2.

In the exemplary embodiment illustrated in Figs. 1 and 2, the optical path length regulator system 20 is configured for adjusting an optical path length of the second optical path P2 by adjusting a geometric path length of the second optical path P2 by correspondingly moving the movable mirrors 22b, 22d, 22f and 23. This allows continually adjusting the optical path length of the second optical path P2, for example within a range of optical path length variations from 40 $\mu$m to 750 mm. In some examples, the optical path length regulator system 20 may allow adjusting optical path length variations with an accuracy of $\pm$5 mm manually or using a step motor. Finer adjustments can be achieved using a piezometer or a galvanometer.

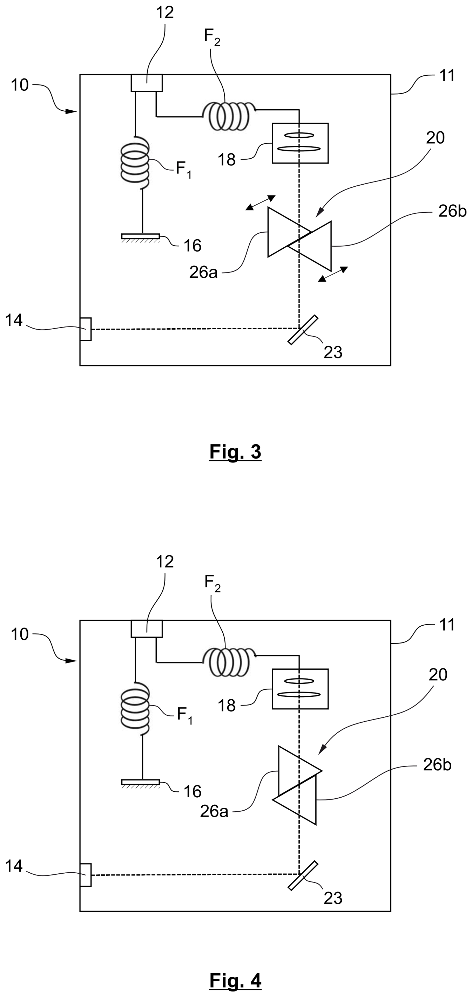

Fig. 3 shows a schematic view of a related embodiment of a measurement module 10 according to the invention, in which the optical path length regulator system 20 comprises a pair of refraction elements 26a and 26b through which the second optical path P2 propagates. The refraction elements 26a and 26b are both movable with respect to each other, as indicated in Fig. 3 by corresponding arrows. The optical path length regulator system 20 can adjust the optical path length of the second optical path P2 by adjusting the length of a portion of the second optical path P2 that extends through the refraction elements 26a, 26b, which have a refractive index higher than the refractive index of air, i.e., having n > 1 (or higher than a refractive index of other portions of the second optical path). In other related embodiments, only one of the refraction elements 26a, 26b may be movable with respect to the other one of the refraction elements 26a, 26b. However, the fact that both refraction elements 26a, 26b are movable, as in the embodiment shown in Fig. 3, may advantageously compensate and prevent an uncontrolled offset of a laser beam transmitted through the second optical path P2 caused by refraction.

Fig. 4 illustrates the state of the measurement module 10 of Fig. 3 after the refraction elements 26a and 26b have been moved with respect to each other - as compared to the situation in Fig. 3 - in order to increase the optical path length of the second optical path P2. If the movable refraction elements 26a and 26b are moved with respect to each other as shown in Fig. 4, the extension of the portion of the second optical path P2 that extends through the refraction elements 26a and 26b having a refraction index higher than 1 (or higher than a refractive index of other portions of the second optical path) is increased, thereby correspondingly increasing the optical path length of the second optical path P2. Likewise, the optical path length of the second optical path P2 could be reduced by moving the movable refraction elements 26a and 26b with respect to each other so as to reduce the extension of the portion of the second optical path P2 that extends through the refraction elements 26a and 26b.

In the exemplary embodiment illustrated in Figs.

3 and 4, the refraction elements 26a and 26b are triangular prisms that are arranged mutually adjacent by one of their external faces, which are arranged oblique with respect to the direction of the second optical path P2. The portion of the second optical path P2 extending through the refraction elements 26a and 26b can be adjusted by correspondingly adjusting a relative position of both refraction elements 26a and 26b, thereby modifying a portion of the adjacent faces thereof at which both refraction elements 26a and 26b overlap.

In the exemplary embodiments illustrated in Figs. 3 and 4, all elements other than the optical path length regulator system 20 may be identical as the remaining elements described for the exemplary embodiment discussed with respect to Figs. 1 and 2 or correspond thereto, for which the same reference numerals are used. Such elements are not explained again for brevity. It should also be noticed that the location of the first optical path P1 and the second optical path P2, which is explicitly indicated in Fig. 1, is not explicitly indicated in the remaining drawings for ease of representation.

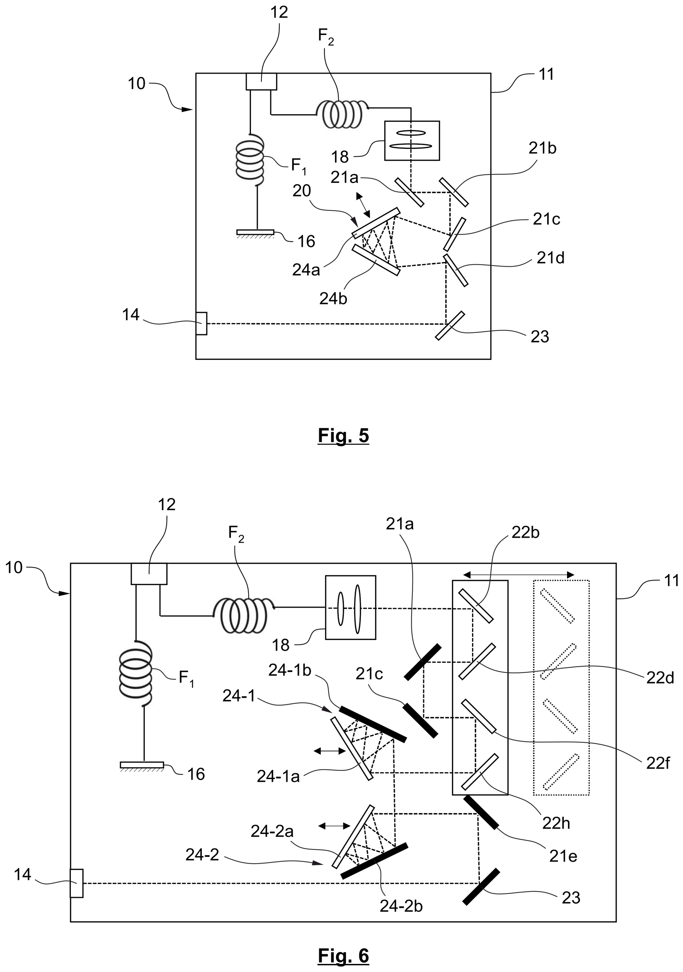

Fig. 5 shows a schematic view of yet another related embodiment of the measurement module 10 of the invention, in which the optical path length regulator system 20 is configured differently from the optical path length regulator system 20 of the previously discussed embodiments. In this case, the measurement module 10 comprises a plurality of fixed mirrors 21a, 21b, 21c, 21d and 23, at which laser light is reflected along the second optical path P2. Further, the optical path length regulator system 20 comprises a pair of tilted mirrors 24a, 24b that are configured for multiply reflecting a laser light beam propagating through the second optical path P2 at reflecting surfaces thereof.

The mirrors 24a and 24b are arranged such that the reflective surfaces thereof face each other and are angled with respect to each other, for example forming an angle of about 8 °, such that a laser light beam propagating through the second optical path P2, in particular between the mirror 20, 21c and 21d, is reflected multiple times, back and forth, between the mirrors 24a and 24b, as shown in Fig. 5. The angle between the mirrors 24a and 24b is exaggerated in Fig. 5 for illustrative purposes.

In this case, the optical path length regulator system 20 can adjust the optical path length of the second optical path P2 by setting a relative position between the two tilted reflection elements 24a and 24b, for example by moving the mirror 24a with respect to the mirror 24b, as indicated in Fig. 5 by an arrow. The mirror 24b may also be movable or may be fixed. When the mirrors 24a and 24b are moved with respect to each other, the length of each of the multiple segments of the second optical path P2 that extend between the mirrors 24a, 24b is correspondingly modified. Since a beam of laser light transmitted along the second optical path P2 is reflected multiple times between the tilted mirrors 24a and 24b, an overall adjustment of the optical path length of the second optical path P2 that may be implemented in embodiments comprising a plurality of movable mirrors, like for example the embodiments illustrated in Figs. 1 and 2, may be achieved by moving just one of the tilted mirrors 24a, 24b in the embodiment of Fig. 5.

The use of different reflection elements and refraction elements as previously discussed with respect to the embodiments illustrated in Figs. 1 to 5 is not mutually exclusive and the skilled person shall understand that the different types of reflection elements and/or refraction elements disclosed herein can be combined at will in a measurement module according to the present invention. This means, in particular, that the different configurations of the optical path length regulator system 20 discussed above with respect to the exemplary embodiments illustrated in Figs. 1 to 5 can be combined with each other. For example, Fig. 6 shows a schematic view of a measurement module 10 according to a further embodiment of the invention, in which the optical path length regulator system 20 integrates a set of movable mirrors, similar to the system of mirrors employed in the embodiments of Figs. 1 and 2, and two pairs of tilted mirrors similar to the pair of tilted mirrors of the embodiment of Fig. 5.

In the measurement module 10 shown in Fig. 6, the optical path length regulator system 20 comprises a plurality of movable mirrors 22b, 22d, 22f and 22h, a plurality of static mirrors 21a, 21c, 21e and 23 and two pairs 24-1 and 24-2 of tilted mirrors. Accordingly, the optical path length regulator system 20 of this embodiment can adjust the optical path length of the second optical path P2 in different ways.

In the embodiment of Fig. 6, a first manner of adjusting the optical path length of the second optical path P2 is by modifying a position of the movable mirrors 22b, 22d, 22f and 22h, which results in a corresponding modification in the optical path length of the second optical path P2. The movable mirrors 22b, 22d, 22f and 22h can be moved together, simultaneously, in the same direction. If the block comprising the movable mirrors 22b, 22d, 22f and 22h is shifted in the horizontal direction, as indicated in Fig. 6 by an arrow, by a distance D, the optical path length of the second optical path P2 is correspondingly modified by a distance 8D (4D in the forward direction and 4D in the backward direction).

A second manner for adjusting the optical path length of the second optical path P2 in the embodiment of Fig. 6 is by using the two pairs 24-1 and 24-2 of tilted mirrors. The first pair 24-1 of tilted mirrors comprises a fixed mirror 24-1b and a movable mirror 24-1a. The second pair 24-2 of tilted mirrors comprises a fixed mirror 24-2b and a movable mirror 24-2a. The movable mirrors 24-1a and 24-2a can be moved together, simultaneously and/or in the same direction as appropriate.

In any of the exemplary embodiments of the measurement module 10 described with respect to Figs. 1-6, the housing 11 is preferably fluid-tight and/or dust-tight, in particular according to IP64.

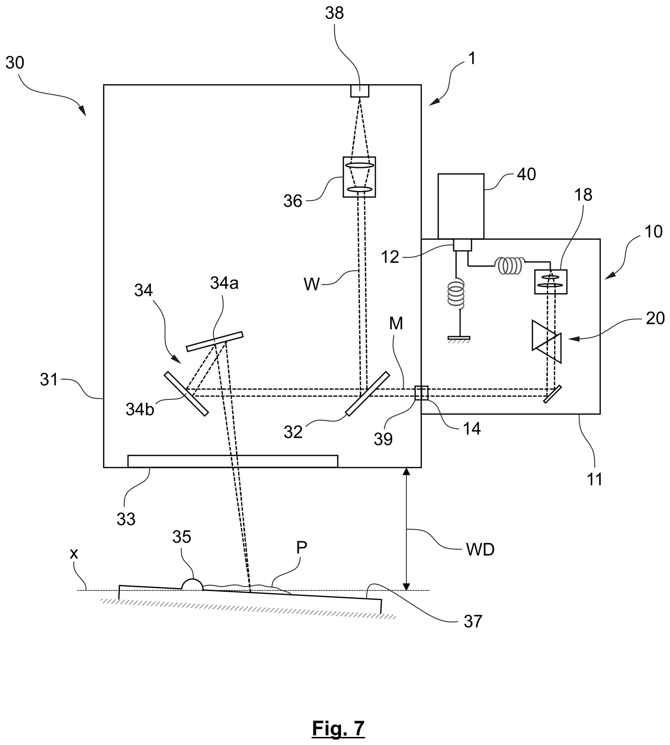

Fig. 7 shows a schematic view of a laser processing apparatus 1 according to the invention that includes a laser processing module 30, a measurement module 10 and a distance detection device 40. The laser processing module 30 is configured for laser processing a workpiece P that is arranged on a work field 37 associated with the laser processing module 30. The work field 37 may be defined on a movable stage configured for holding the workpiece P and/or layers of work material for forming the workpiece P, possibly at different configurable heights with respect to the laser processing module 30.

The workpiece may for example be an object being additively manufactured by the laser processing module 30 or an electronic device or device part, such as a battery or battery part, in which the laser processing module 30 may be implementing a laser welding process.

The laser processing module 30 is configured for laser-processing the workpiece P on the work field 37 by scanning a work beam W of laser light over the work field 37 to thermally interact with a work material of which the workpiece P is made. The work beam W is inputted into the laser processing module 30 through an input 38. In other related embodiments, the input 38 may include or may be replaced by a laser light source for generating the work beam W.

The laser processing module 30 comprises an optical element 32, for example a dichroic mirror, that is reflective for the work beam W and is configured for reflecting the work beam W towards a deflection unit 34, which is configured for scanning the work beam W over the work field 37 through a laser-transparent window 33 that is formed in a housing 31 of the laser processing module 30. The deflection unit 34 comprises a pair of XY-movable mirrors 34a and 34b. The housing 31 encloses the remaining components of the laser processing module 30.

The measurement module 10 of the apparatus 1 can correspond to a measurement module 10 according to any of the embodiments of the present invention, in particular according to any of the exemplary embodiments discussed above with respect to Figs. 1-6. In the specific exemplary embodiment shown in Fig. 7, the measurement module 10 corresponds to the measurement module 10 of Figs. 3 and 4 but this should be understood as a non-limiting example.

The measurement module 10 is optically coupled to the laser processing module 30 via the coupling port 14 and via a corresponding coupling port 39 of the laser processing module 30 that is formed through the housing 31 of the laser processing module 30. The housing 31 can be fluid-tight and/or dust-tight, in particular according to IP64.

The measurement module 10 is mechanically coupled to the laser processing module 30 through a mechanical coupling between the housing 11 of the measurement module 10 and the housing 31 of the laser processing module 30, such that the measurement module 10 is arranged adjacent to the laser processing module 30.

ule 30.

As seen in Fig. 7, a laser light beam propagating through the second optical path P2 of the measurement module 10 is optically coupled through the coupling port 14 and through the coupling port 39 into the laser processing module 30 in the form of a measurement beam M, which is transmitted through the optical element 32 towards the deflection unit 34 of the laser processing module 30. The deflection unit can hence scan over the work field 32 both the work beam W and the measurement beam M. The dichroic mirror 32 is transmissive for the measurement beam M.

According to some examples, the work beam can be formed by laser light with a wavelength from 1000 nm to 1100 nm whereas the measurement beam can be formed by laser light with a wavelength from 810 nm to 850 nm. In the embodiment shown in Fig. 7, the dichroic mirror is reflective for wavelengths from 1030 nm to 1090 and transmissive for wavelengths from 400 nm to 950 nm.

The distance detection device 40 is optically coupled to the coupling port 12 of the measurement module 10. In the exemplary embodiment shown, the distance detection device 40 includes a laser source light for generating coherent laser light for generating the laser beams that propagate along the first optical path P1 and the second optical path P2 of the measurement module 10. Further, the distance detection device 40 comprises an interference sensor configured for performing distance detection measurements based on an interference of the laser light propagating through the first optical path P1 of the measurement module 10 with laser light propagating through the second optical path P2 of the measurement module 10 (corresponding to the measurement beam M).

Thus, the distance detection device 40 and the measurement module 10 implement, in combination, an interferometer system, wherein the first optical path P1 forms the reference arm of the interferometer system and the second optical path P2 forms the object arm of the interferometer system. Due to the configuration of the measurement module 10, the reference arm of this interferometer system has a fixed optical path length, whereas the optical path length of the object arm, which is followed by the measurement beam M, is adjustable by the optical path length regulator system 20 of the measurement module 10.

The laser light transmitted through the coupling port 14 between the measurement module 10 and the laser processing module 30 forms the measurement beam M that that is used in the laser processing apparatus 1, in particular by the distance detection device 40, to perform distance measurements.

The measurement beam M, after reaching the workpiece P and/or the work field 37, is reflected back past the deflection unit 34 and past the optical element 32 into the measurement module 10, wherein it propagates again (backwards) along the second optical path P2 into the distance detection device 40. Based on an interferometric comparison between the measurement beam M received through the second optical path P2 and a corresponding beam of laser light propagating along the first optical path P1, the distance detection device 40 can perform distance measurements, for example to determine variations in a distance between the workpiece P and/or the work field 37 and the deflection unit 34. Additionally or alternatively, the distance detection device 40 can be configured to determine absolute values of such distances.

Different distances related to the laser-processing of the workpiece P by the laser processing module 30 may vary during the laser processing process. For example, a work distance WD corresponding to a minimal distance between the work field 37 or the workpiece P and the laser processing module 30 may vary. For example, the laser processing apparatus 1 may be used with a work distance WD = 200 mm for a first use and it may be used with a work distance WD = 1000 mm for a second use different from the first use. As a consequence, the work field 37 and/or the workpiece P may no longer be within a range of optical distances from the distance detection device 40 in which the distance detection device 40 guarantees distance detection with a given accuracy. The measurement module 10 of the present invention allows compensating such variation in the work distance WD by correspondingly adapting the optical path length of the second optical path P2 to ensure that the distance detection device 40 can continue to operate with optimal detection conditions irrespectively of the concurrence of such sources of distance variability, i.e. that the work field 37 and/or the workpiece P stay within the range of optimal detection of the distance detection device even after the work distance is modified.

For example, if the work distance WD is modified, for example from a value WD=300 mm to a value WD=1000 mm or inversely, this causes a corresponding modification of the optical path length of the measurement beam M by 700 mm. Consequently, if the distance detection device 40 was initially configured for performing accurate distance detection at an optical distance from the distance detection device 40 corresponding to the work distance WD=300 within a detection range of ± 10 mm, distance detections by the distance detection device 40 will no longer be possible or at least not equally accurate when the work distance takes the value WD=1000 mm, since the work field 37 and/or the workpiece P will be out of the detection range of the distance detection device 40. Further, if the measurement beam M was focused on the work field 37 and/or on the workpiece P for the initial value of the work distance WD=300 mm, the modification of the work distance WD can cause the measurement beam to loose focus and this leads to an worsened signal-to-noise ratio for the distance detection device 40, which can no longer operate under optimal detection conditions. In order to compensate this, the optical path length regulator system 20 of the measurement module 10 of the invention can be operated the compensate the modification in the optical path length of the measurement beam M due to the modification in the work distance WD by correspondingly adjusting the optical path length of the second optical path P2 within the measurement module 10, such that a difference between the fixed optical path length of the first optical path P1 and the optical path length of the second optical path P2 retakes the initial value. Once this compensation by the optical path length compensation system 20 is implemented, distance detections by the distance detection device 40 will continue to be possible as accurately as for the initial value of the work distance, since the work field 37 and/or the workpiece P will be again within the detection range of the distance detection device 40. Further, the measurement beam M will automatically be focused again on the work beam 37 and/or on the workpiece P for the new work distance WD and the distance detection device 40 will continue to operate with an optimal signal-to-noise ratio and hence with optimal accuracy. Notably, this does not require operating the focusing device 18 and/or the distance detection device 40 or modifying the settings thereof.

Operating in the same manner, the measurement module 10 of the invention can compensate variations in the optical path length of the measurement beam due to an accidental deviation/tilt of the work field 37 (see deviation from horizontal plane X illustrated in Fig. 7).

The distance detection device 40 can be configured to perform distance measurements, for example to determine a distance between the workpiece P and/or the work field 37 and the deflection unit 34 and/or variations in such distance due to an accidental deviation/tilt of the work field 37 (see deviation from horizontal plane X illustrated in Fig. 7) and/or due to the presence of surface irregularities 35 in the work field 37 and/or in the workpiece P. The distance detection device 40 can also perform distance measurements to detect an absolute value of the work distance WD or variations in the work distance WD.

The laser processing module 30 comprises a focusing device 36 arranged between the input 38 and the optical element 32 that is configured for focusing the work beam W on the work field 37 and/or on the workpiece P. The focusing device 36 is comprised within the housing 31 of the laser processing module 30. The focusing device 36 can in particular correspond to a focusing unit (cf. "Fokussierungsvorrichtung") as disclosed in WO 2018/078137 A1. Notably, the measurement module 10 includes the focusing device 18, which can be configured for (in combination with the optical path length regulator system 20) focusing the measurement beam M on the work field 37 and/or on the workpiece P, in particular such that a position of the focus of the measurement beam M corresponds to a position of the focus of the work beam W. Thus, the work beam W and the measurement beam M can be focused by respective dedicated focusing devices 36 and 18, respectively. This allows adjusting the focusing settings of the focusing device 36 for the work beam W without affecting the focusing settings for the measurement beam M. Further, the focusing device 36 needs not be adapted to the distance detection device 40 and vice versa.

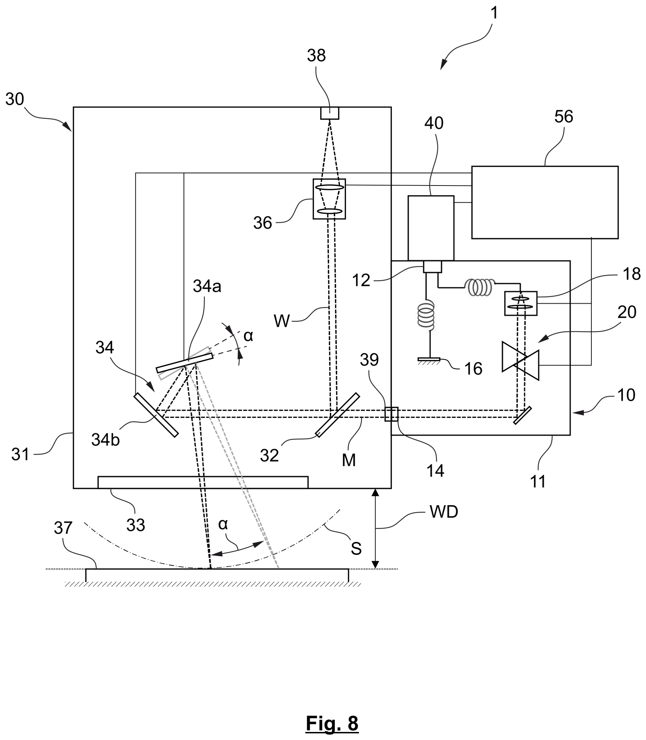

Fig. 8 shows a related embodiment of the laser processing apparatus 1 shown in Fig. 7, including the laser processing module 30, the measurement module 10 and the distance detection device 40. In the embodiment shown in Fig. 8, the laser processing apparatus 1 further includes a control unit 56 that is operatively connected with the deflection unit 34, in particular with each of the mirrors 34a and 34b, with the focusing unit 36, with the distance detection device 40, with the focusing device 18, and with the optical path length regulator system 20. The control unit 56 can for example be a SP-ICE control card.

Fig. 8 schematically illustrates a further source of distance variability that can be compensated by the optical path length regulator system 20 of the measurement module 10. As the deflection unit 34 of the laser processing module 30 operates at different deflection angles $\alpha$ to scan the measurement beam M over the planar work field 37, the focus of the measurement beam M defines a circular trajectory S. As a consequence, if no compensation is implemented, with increasing deflection angles, i.e., at peripheric positions on the work field 37 far from a center of the work field 37, an optical path length of the measurement beam M may uncontrolledly vary. For example, as the deflection angle $\alpha$ increases, the optical path length of the measurement beam M may increase by a factor $\left(\frac{1-\cos\alpha}{\cos\alpha}\right)$. As a result, in particular for big values of the deflection angle $\alpha$, the work field 37 and/or the workpiece P may leave a detection range of the distance detection device 40, in which the distance detection device 40 may be configured to perform accurate distance detections. Consequently, distance detections by the distance detection device 40 can lose accuracy or even stop being possible. Further, the measurement beam M can increasingly be off focus.

To compensate this such that distance detections by the distance detection device 40 continue to be possible even for big values of the deflection angle $\alpha$ (i.e. even in a peripheral region of the work field 37) as accurately as for smaller values of the deflection angle $\alpha$ (i.e. in a central region of the work field 37) and such that the measurement beam M remains focused on the planar work field 37 irrespectively of a setting of the deflection unit 34, i.e., irrespectively of the deflection angle $\alpha$, the control unit 56 is configured for correspondingly controlling the optical path length regulator system 20 of the measurement module 10 depending on a function of the deflection angle $\alpha$ implemented by the deflection unit 34. For example, for each setting of the deflection unit 34, the control unit 56 can be configured to compensate a corresponding variation in the optical path length of the measurement beam M by correspondingly controlling the optical path length regulator system 20 to adjust the optical path length of the second optical path P2 such that a difference between the fixed optical path length of the first optical path P1 and the variable optical path length of the second optical path P2 stays constant for all values of the deflection angle $\alpha$.

Additionally or alternatively, the control unit 56 can be configured to control the optical path length regulator system 20 based on a distance and/or a distance variation determined by the distance detection device 40 and/or to compensate any of the possible sources of distance variability discussed above for the embodiment of Fig. 7, for example as a function of the work distance WD.

For example, if the work distance WD is modified, the control unit 56 can detect this variation, for example via a user input, via direct communication with a movable stage on which the work field 37 may be defined (the work distance WD corresponding in this case to a distance between the movable stage and the laser processing module 30), and the control unit 56 can then control the optical path length regulator system 20 correspondingly to adjust the optical path length of the second optical path P2 in order to compensate the variation in the work distance WD as explained above.

Referring back to Fig. 7, a misalignment of the work field 37 with respect to an intended target alignment thereof, for example with respect to a horizonal alignment according to a horizontal plane X shown in Fig. 7, may lead to unintended variations in a distance between the deflection unit 34 and the work field 37. As a further example, the presence of surface irregularities 35 on the work field 37 or on an upper surface of the workpiece P may also lead to unintended variations in a distance between the deflection unit 34 and the work field 37. Any of these sources of distance variation is associated with a corresponding (unintended) variation of the overall optical path length of the measurement beam M, which does however not substantially affect the detection of distances by the distance detection device 40 as long as the unintended variation of the overall optical path length of the measurement beam M does not lead to the work field 37 and/or the workpiece P leaving a detection range of the distance detection device 40. In cases in which such unintended variations of the overall optical path length of the measurement beam M can lead to the work field 37 and/or the workpiece P leaving the detection range of the distance detection device 40, the optical path length regulator system 20 can be used to compensate the unintended distance variation, possibly in real time.

The control unit 56 can be configured to operate the optical path length regulator system 20 to correspondingly adjust the optical path length of the second optical path P2 subject to the condition that a variation of the overall optical path length of the measurement beam M greater than a predetermined threshold corresponding to a detection range of the distance detection device 40 is detected, in particular by the distance detection device 40.

For example, when a distance between the deflection unit 34 and the work field 37 varies due to an irregularity 35 on the surface of the work field 37 or of the workpiece P or due to a misalignment of the work field 37 itself (cf. see Fig. 7), this may be detected by the distance detection device 40, and the control unit 56 can control the optical path length regulator system 20 to correspondingly adjust the optical path length of the second optical path P2 if necessary to keep the work field 37 and/or the workpiece P within the detection range of the distance detection device 40. Otherwise, if compensation is not necessary to keep the work field 37 and/or the workpiece P within the detection range of the distance detection device 40, the control unit 56 needs not operate the optical path length regulator system 20.

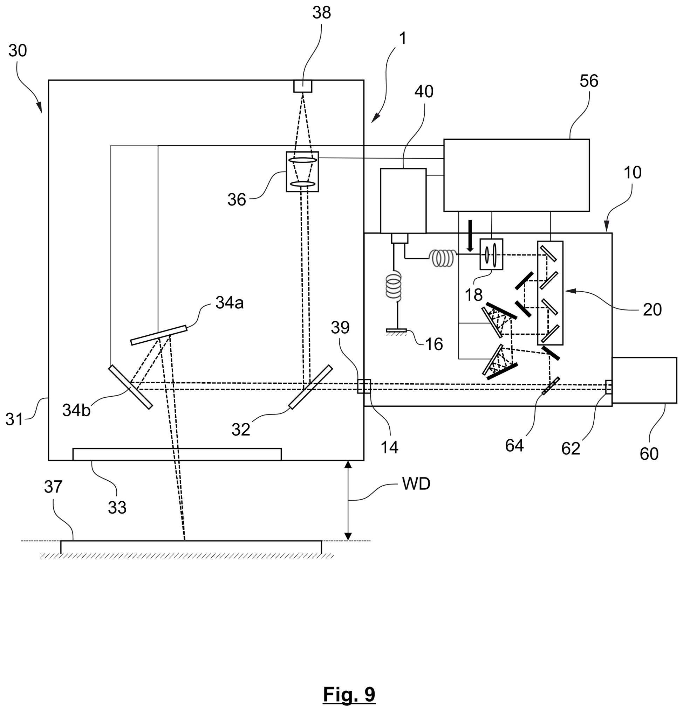

Fig. 9 shows a schematic view of a related embodiment of a laser processing apparatus 1 similar to the laser processing apparatus illustrated in Fig. 8, but in which the measurement module 10 corresponds to the measurement module of Fig. 6 rather than to the measurement module of Figs. 3 and 4. In this embodiment, the optical path length regulator system 20 can be operated to adjust the optical path length of the second optical path P2 by moving the movable mirrors 22b, 22d, 22f and 22h (see Fig. 6) or by moving the movable tilted mirrors 24-1a and 24-2a.

The control unit 56 of the embodiment shown in Fig. 9 can be configured to control the optical path length regulator system 20 to adjust the optical path length of the second optical path P2 by moving the movable mirrors 22b, 22d, 22f and 22h when a distance variation to be compensated is caused for example by a change in the work distance WD, for example in a range from 200 mm to 750 mm, since this compensation does possibly not require high compensation speeds and/or fine adjustment in real-time. When the distance variation to be compensated corresponds to a change in the settings of the deflection unit 34 (cf. Fig. 8), e.g., to a change in the deflection angle $\alpha$, to a misalignment of the work field 37 and/or to the presence of surface irregularities 35 on the work field 37 or on an outer surface of the workpiece P, which distance variation may be for example in a range from 20 mm to 50 mm, the control unit 56 can be configured to operate the optical path length regulator system 20 to compensate such distance variations rapidly, in real time, possibly during a scanning operation of the deflection unit 34, by a corresponding adjustment of the optical path length of the second optical path P2 by moving the movable tilted mirrors 24-1a and 24-2a. In this case, by moving a reduced number of mirrors, in particular two mirrors, with reduced overall mass, a quick fine adjustment of the optical path length of the second optical path P2 can be implemented in real-time, for example within a reaction time from 2 ms to 5 ms.

As shown in Fig. 9, the measurement module 10 may include a dichroic element 64 configured for extracting a part of laser light (a wavelength subrange thereof) propagating along the second optical path P2 via a monitoring port 62 formed in the housing 11 of the measurement module. An optical monitoring device 60 can then be connected to the monitoring port 62 and used to obtain information about a laser process being carried out with the laser processing module 30 using the light extracted through the monitoring port 62. The optical monitoring device 60 generates a monitoring laser beam that copropagates with the measurement beam M along a portion of the measurement beam path, to the work field 37 and back, to monitor a laser processing performed by the work beam W of the laser processing module 38. The monitoring laser beam can have a wavelength different to a wavelength of the measurement beam M and/or of the work beam W, for example a wavelength of 633 nm. The optical monitoring device 60 can be or comprise a camera. The monitoring laser beam corresponds to said part of the laser light beam propagating along the second optical path P2 that is extracted by the dichroic element 64.

In the exemplary embodiment shown in Fig. 9, the dichroic element 64 takes the place of the mirror 23 of Fig. 3. The dichroic element 64 is configured for reflecting the measurement beam M coming from the coupling port 14 towards the optical path length regulator system 20 and for transmitting the monitoring laser beam, coming from the coupling port 14 towards the monitoring port 62.

In other related embodiments, rather than taking the place of the mirror 23 of Fig. 3, the dichroic element 64 can be arranged in an alternative position indicated in Fig. 9 by a black arrow between the connection port 12 and the focusing device 18 to extract light of the measurement beam between the focusing device 18 and the connection port 12. In similar embodiments, the dichroic element 64 can be arranged between the focusing device 18 and the optical path length regulator system 20 to extract light of the monitoring beam there. These configurations have the advantage that the extracted light can remain within a detection range of the optical monitoring device 60 and focused irrespectively of possible variations of the optical path length of the measurement beam M, since such variations can be compensated by the optical path length regulator system 20.

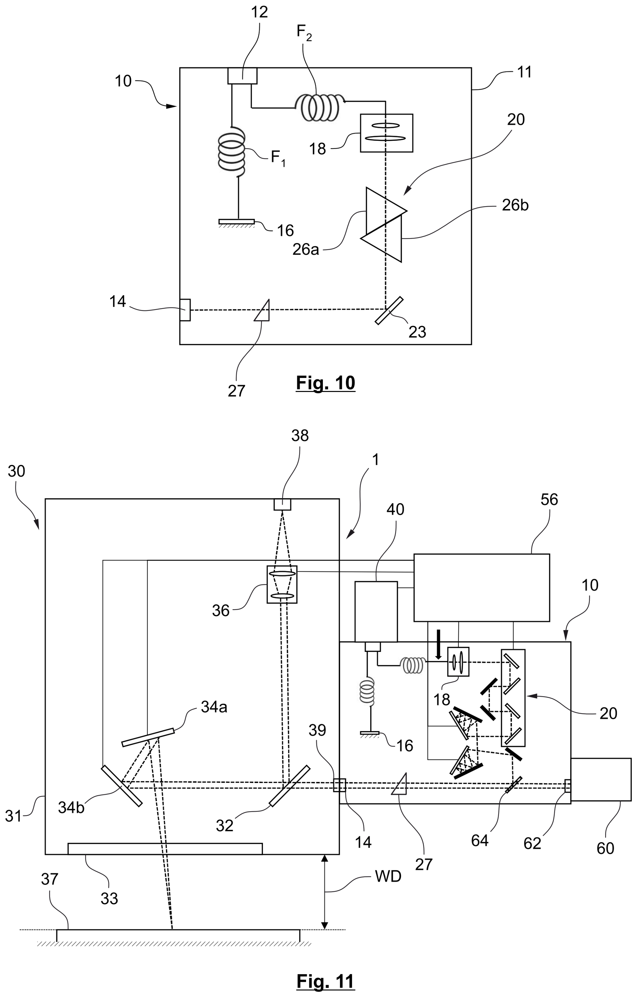

Fig. 10 shows an embodiment of the measurement module of Figs. 3-4 in which a beam rotation element 27 is arranged along the second optical path P2 of the measurement module 10, between the optical path length regulator system 20 and the coupling port 14. The beam rotation element 27 is rotatable around a central axis that corresponds to the optical axis of the second optical path P2. The beam rotation element 27 is configured as a rotatable wedge prism 27.

Fig. 11 shows an embodiment of the laser processing apparatus of Fig. 9, including a beam rotation element 27, functionally and structurally corresponding to the beam rotation element 27 of Fig. 10. A rotation of the wedge prism 27 causes the measurement beam M (cf. Fig. 8) to preces or rotate around a central point on the work field 37. This allows implementing a so-called seam tracking functionality. The beam rotation element 27 can be rotated to analyze, using the measurement beam M, the surroundings of a point on the work field 37 before and/or after using the work beam W to laser-process said point, for example during a laser-welding process.

Although preferred exemplary embodiments are shown and specified in detail in the drawings and the preceding specification, these should be viewed as purely exemplary and not as limiting the invention. It is noted in this regard that only the preferred exemplary embodiments are shown and specified, and all variations and modifications should be protected that presently or in the future lie within the scope of protection of the invention as defined in the claims.

The present disclosure further refers to the following Examples:

1. A measurement module (10) for a laser processing apparatus (1) comprising:

a housing (11) comprising a connection port (12) for optically coupling the measurement module (10) to a distance detection device and a coupling port (14) for optically coupling the measurement module (10) to a laser processing module (30) of the laser processing apparatus (1);

wherein a first optical path (P1) and a second optical path (P2) for the laser light are defined within the housing (11) for laser light received and outputted through the connection port (12), wherein the first optical path (P1) is defined from the connection port (12) to a reference optical reflector (16), wherein the reference optical reflector (16) reflects the laser light back to the connection port (12), wherein the second optical path (P2) is defined from the connection port (12) to the coupling port (14) and back to the connection port (12); and

wherein the measurement module (10) further comprises an optical path length regulator system (20) configured for adjusting an optical path length difference between an optical path length of the first optical path (P1) and an optical path length of the second optical path (P2);

wherein the first optical path (P1) has a fixed predefined optical path length; and

wherein the second optical path (P2) has a variable optical path length adjustable by the optical path length regulator system (20).

2. The measurement module of Example 1, wherein the optical path length regulator system (20) is configured for varying the optical path length of the second optical path (P2) by an optical path length variation within a range from 20 μm to 1200 mm, preferably from 40 μm to 750 mm.

3. The measurement module of Example 1 or 2, further comprising a focusing device (18) arranged in the second optical path (P2), in particular between the connection port (12) and the optical path length regulator system (20), configured for focusing the laser light transmitted through the second optical path (P2), wherein the focusing device (18) preferably has a fixed focal length.

4. The measurement module of any of the preceding Examples, wherein the optical path length regulator system (20) comprises a plurality of reflection elements (22a, 22b, 22c, 22d, 22e, 22f) for reflecting the laser light along the second optical path (P2), wherein the plurality of reflection elements (22a, 22b, 22c, 22d, 22e, 22f) comprises at least two movable reflection elements (22b, 22d, 22f), wherein the optical path length of the second optical path (P2) is adjustable, in particular continually adjustable, by setting a position of the at least two movable reflection elements (22b, 22d, 22f).

5. The measurement module of Example 4, wherein the optical path length regulator system (20) comprises at least one pair of reflection elements (22a, 22b, 22c, 22d, 22e, 22f) for reflecting the laser light along the second optical path (P2), wherein an extension of the second optical path (P2) between reflection elements (22a, 22b; 22c, 22d; 22e, 22f) of each of the at least one pair of reflection elements is adjustable, in particular continually adjustable, by setting a relative position, in particular a separation distance, between the reflection elements (22a, 22b; 22c, 22d; 22e, 22f) of each of the at least one pair of reflection elements.

6. The measurement module of Example 5, wherein each pair of reflection elements (22a, 22b; 22c, 22d; 22e, 22f) comprises one movable reflection element (22b, 22d, 22f) movable in a direction corresponding to the second optical path (P2).

7. The measurement module of Example 4 or 5, wherein the optical path length regulator system (20) is configured for simultaneously and/or equally displacing two or more, preferably all, of the movable reflection elements (22b, 22d, 22f).

8 The measurement module of Example 6 or 7, wherein all movable reflection elements (22b, 22d, 22f) are movable together in the same direction.

9. The measurement module of any of the preceding Examples, wherein the optical path length regulator system (20) comprises at least one pair of tilted reflection elements (24a, 24b) for multiply reflecting the laser light along the second optical path (P2) at reflecting surfaces thereof, wherein the reflective surfaces of each of the reflection elements of each of the at least one pair of tilted reflection elements face each other and are angled with respect to each other, wherein an extension of the second optical path (P2) between tilted reflection elements (24a, 24b) of each of the at least one pair of mutually tilted reflection elements is adjustable by setting a relative position between said tilted reflection elements (24a, 24b), preferably by moving both of said tilted reflection elements (24a, 24b).

10. The measurement module of any of the preceding Examples, wherein the optical path length regulator system (20) comprises at least one pair of refraction elements (26a, 26b) for transmitting therethrough the laser light along the second optical path (P2), wherein an extension of the second optical path (P2) through refraction elements (26a, 26b) of each of the at least one pair of refraction elements (26a, 26b) is adjustable by setting a relative position of said refraction elements (26a, 26b), preferably by moving both of said refraction elements (26a, 26b) with respect to each other.

11. The measurement module of any of the preceding Examples, further comprising a distance detection device (40), in particular a detection device including or connectable to an interference sensor, optically coupled to the connection port (12) and configured for detecting a distance based on an interference of the laser light received by the distance detection device (40) from the first optical path (P1) with the laser light received by the distance detection device (40) from the second optical path (P2).

12. The measurement module of any of the preceding Examples, further comprising a monitoring port (62) and an optical element (64) configured for reflecting a first part of laser light propagating along the second optical path (P2) and for transmitting a second part of said laser light propagating along the second optical path (P2), such that said first or second part is extracted from the second optical path (P2) and directed towards the monitoring port (62).

13. An interferometer system comprising a distance detection device (40), a coupling port (14), and a measurement module (10), in particular a measurement module (10) according to any of the preceding Examples;

  wherein the measurement module (10) defines a first optical path (P1) corresponding to a reference arm of the interferometer system and a second optical path (P2) corresponding to an object arm of the interferometer system, wherein the measurement module (10) comprises an optical reflector (16) arranged in the first optical path (P1) for reflecting back laser light received along the first optical path (P1);
  wherein the measurement module (10) further comprises an optical path length regulator system (20) configured for adjusting an optical path length of the second optical path (P2);
  wherein the coupling port (14) is configured for optically coupling the second optical path (P2) with a laser processing module; and
  wherein the distance detection device (40) is configured for performing distance measurements based on an interference of laser light transmitted along the first optical path (P1) with laser light transmitted along the second optical path (P2).

14. A laser processing apparatus (1) comprising:

  a laser processing module (30) for laser-processing a workpiece (P) on a work field (37) using a work beam (W); and
  a measurement module (10) according to any of Examples 1 to 12, wherein the measurement module (10) is optically coupled with the laser processing module (30) by the coupling port (14) thereof to receive and output laser light from and to the laser processing module (30) in the form of a measurement beam (M);
  wherein the laser processing module (30) comprises:

    an optical element (32) for reflecting one of the work beam (W) and the measurement beam (M) and for transmitting therethrough the other one of the work beam (W) and the measurement beam (M); and
    a deflection unit (34) for deflecting the work beam (W) and the measurement beam (M) to and from the workpiece (P) and/or the work field (37);
    wherein a work beam path and a measurement beam path are defined in the laser processing module (30) for the work beam (W) and the measurement beam (M) respectively, wherein the work beam path is defined such that the work beam (W) is reflected/transmitted by the optical element (32) towards the deflection unit (34) and deflected by the deflection unit (34) to the workpiece (P) and/or the work field (37), wherein the measurement beam (M) propagates in the measurement module (10) along the second optical path (P2) of the measurement module (10), wherein the measurement beam path is defined such that the measurement beam (M) propagates from the coupling port (14) of the measurement module (10) to the optical element (32) and to the deflection unit (34) and back to the coupling port (14), being transmitted/reflected by the optical element (32) to and from the deflection unit (34), being deflected by the deflection unit (34) to and from the workpiece (P) and/or the work field (37), and being reflected back at the workpiece (P) and/or the work field (37).

15. The laser processing apparatus (1) of Example 14, further comprising the distance detection device (40) of Example 11, wherein the distance detection device (40) is configured for determining variations in a distance between the workpiece (P) and/or work field (37) and the deflection unit (34) and/or for determining said distance (D) based on an interference of the measurement beam with laser light propagating in the measurement module (10) along the first optical path (P1) thereof.

16. The laser processing apparatus (1) of Example 14 or 15, further comprising a control unit (56) configured for controlling the optical path length regulator system (20) of the measurement module (10) based on a distance determined by the distance detection device and/or on a variation in a distance determined by the distance detection device (40).

17. The laser processing apparatus (1) of any of Examples 14 to 16, wherein the control unit (56) or a further control unit is configured for controlling the optical path length regulator system (20) of the measurement module (10) based on a variation in a work distance (WD) of the laser processing module (30), wherein the work distance (WD) corresponds to a minimal distance between the work field (37) and the laser processing module (30), wherein the control unit (52) or the further control unit is configured for compensating a variation in an optical path length of the measurement beam path due to said variation in the work distance (WD) by controlling the optical path length regulator system (20) to correspondingly adjust the optical path length of the second optical path (P2).

18. The laser processing apparatus (1) of any of Examples 14 to 17, wherein the control unit (56) or a further control unit is configured for controlling the optical path length regulator system (20) of the measurement module (10) based on a variation in a deflection setting of the deflection unit (34) of the laser processing module (30), wherein the control unit (56) or the further control unit is configured for compensating a variation in an optical path length of the measurement beam path due to said variation in the deflection setting of the deflection unit (34) by controlling the optical path length regulator system (20) to correspondingly adjust the optical path length of the second optical path (P2).

19. The laser processing apparatus (1) of any of Examples 14 to 18, wherein the laser processing module (30) comprises a work beam focusing device (36) for focusing the work beam (W), wherein the work beam focusing device (36) has a variable focal length and is preferably arranged in the work beam path between the optical element (32) and a source or input (38) of the work beam (W).

20. The laser processing apparatus (1) of any of Examples 14 to 19, wherein the measurement module (10) comprises the focusing device (18) defined in Example 3, wherein the focusing device (18) is configured for focusing the measuring beam (M) on the work field (37) and/or on the workpiece (P), in particular in a position correspondiong to a focus of the work beam (W).

21. The laser processing apparatus (1) of any of Examples 14 to 20, wherein the measurement beam (M) is formed by light in a wavelength range from 700 nm to 1400 nm, wherein the work beam (W) is preferably formed by light in a wavelength range different from the wavelength range of the measurement beam.

22. The laser processing apparatus (1) of any of Examples 14 to 21, wherein the laser processing module (30) comprises a housing (31) enclosing at least some of the remaining components of the laser processing module (30), wherein the work beam path and the measurement beam path are defined within the housing (31) of the laser processing module (30) at least in part, wherein a further coupling port (39) connectable to the coupling port (14) is formed through the housing (31) of the laser processing module (30), wherein the housing (31) of the laser processing module (30) preferably is fluid-tight and/or dust-tight.

23. The laser processing apparatus (1) of Example 22, wherein the measurement module (10) and the laser processing module (30) are mutually attachable, wherein the housing (11) of the measurement module (10) is attachable to the housing (31) of the laser processing module (30), in particular such that the measurement module (10) is arrangeable adjacent to the laser processing module (30).

# Claims

1. A measurement module (10) for a laser processing apparatus (1) comprising:

   a housing (11) comprising a connection port (12) for optically coupling the measurement module (10) to a distance detection device and a coupling port (14) for optically coupling the measurement module (10) to a laser processing module (30) of the laser processing apparatus (1);
   wherein a first optical path (P1) and a second optical path (P2) for the laser light are defined within the housing (11) for laser light received and outputted through the connection port (12), wherein the first optical path (P1) is defined from the connection port (12) to a reference optical reflector (16) of the measurement module (10), wherein the reference optical reflector (16) reflects the laser light back to the connection port (12), wherein the second optical path (P2) is defined from the connection port (12) to the coupling port (14) and back to the connection port (12); and
   wherein the measurement module (10) further comprises an optical path length regulator system (20) configured for adjusting an optical path length difference between an optical path length of the first optical path (P1) and an optical path length of the second optical path (P2);
   wherein the first optical path (P1) has a fixed predefined optical path length; and
   wherein the second optical path (P2) has a variable optical path length adjustable by the optical path length regulator system (20);
   wherein the measurement module (10) further comprises a focusing device (18) arranged in the second optical path (P2) between the connection port (12) and the optical path length regulator system (20) and configured for focusing the laser light transmitted through the second optical path (P2).

2. The measurement module of claim 1, wherein the focusing device (18) has a variable focal length and preferably comprises one or more static lenses and one or more movable lenses, corresponding galvanometer motors for setting the position of each of the movable lenses, and a corresponding control unit for adjusting the focal length of the focusing device (18).

3. The measurement module of claim 1 or 2, wherein the focusing device (18) has a fixed focal length and preferably comprises one or more static lenses and is preferably free of any movable lenses.

4. The measurement module of any of the preceding claims, wherein the optical path length regulator system (20) comprises a plurality of reflection elements (22a, 22b, 22c, 22d, 22e, 22f) for reflecting the laser light along the second optical path (P2), wherein the plurality of reflection elements (22a, 22b, 22c, 22d, 22e, 22f) comprises at least two movable reflection elements (22b, 22d, 22f), wherein the optical path length of the second optical path (P2) is adjustable, in particular continually adjustable, by setting a position of the at least two movable reflection elements (22b, 22d, 22f).

5. The measurement module of claim 4, wherein the optical path length regulator system (20) comprises at least one pair of reflection elements (22a, 22b, 22c, 22d, 22e, 22f) for reflecting the laser light along the second optical path (P2), wherein an extension of the second optical path (P2) between reflection elements (22a, 22b; 22c, 22d; 22e, 22f) of each of the at least one pair of reflection elements is adjustable, in particular continually adjustable, by setting a relative position, in particular a separation distance, between the reflection elements (22a, 22b; 22c, 22d; 22e, 22f) of each of the at least one pair of reflection elements, wherein each pair of reflection elements (22a, 22b; 22c, 22d; 22e, 22f) preferably comprises one movable reflection element (22b, 22d, 22f) movable in a direction corresponding to the second optical path (P2);
   wherein all movable reflection elements (22b, 22d, 22f) are more preferably movable together in the same direction.

6. The measurement module of claim 4 or 5, wherein the optical path length regulator system (20) is configured for simultaneously and/or equally displacing two or more, preferably all, of the movable reflection elements (22b, 22d, 22f), wherein all movable reflection elements (22b, 22d, 22f) are preferably movable together in the same direction.

7. The measurement module of any of the preceding claims, wherein the optical path length regulator system (20) comprises at least one pair of tilted reflection elements (24a, 24b) for multiply reflecting the laser light along the second optical path (P2) at reflecting surfaces thereof, wherein the reflective surfaces of each of the reflection elements of each of the at least one pair of tilted reflection elements face each other and are angled with respect to each other, wherein an extension of the second optical path (P2) between tilted reflection elements (24a, 24b) of each of the at least one pair of mutually tilted reflection elements is adjustable by setting a relative position between said tilted reflection elements (24a, 24b), preferably by moving both of said tilted reflection elements (24a, 24b).

8. The measurement module of any of the preceding claims, wherein the optical path length regulator system (20) comprises at least one pair of refraction elements (26a, 26b) for transmitting therethrough the laser light along the second optical path (P2), wherein an extension of the second optical path (P2) through refraction elements (26a, 26b) of each of the at least one pair of refraction elements (26a, 26b) is adjustable by setting a relative position of said refraction elements (26a, 26b), preferably by moving both of said refraction elements (26a, 26b) with respect to each other.

9. The measurement module of any of the preceding claims, further comprising a distance detection device (40), in particular a detection device including or connectable to an interference sensor, optically coupled to the connection port (12) and configured for detecting a distance based on an interference of the laser light received by the distance detection device (40) from the first optical path (P1) with the laser light received by the distance detection device (40) from the second optical path (P2).

10. The measurement module of any of the preceding claims, further comprising a monitoring port (62) and an optical element (64) configured for reflecting a first part of laser light propagating along the second optical path (P2) and for transmitting a second part of said laser light propagating along the second optical path (P2), such that said first or second part is extracted from the second optical path (P2) and directed towards the monitoring port (62).

11. An interferometer system comprising a distance detection device (40), a coupling port (14), and a measurement module (10) according to any of the preceding claims;

   wherein the measurement module (10) defines a first optical path (P1) corresponding to a reference arm of the interferometer system and a second optical path (P2) corresponding to an object arm of the interferometer system, wherein the measurement module (10) comprises an optical reflector (16) arranged in the first optical path (P1) for reflecting back laser light received along the first optical path (P1);
   wherein the measurement module (10) further comprises an optical path length regulator system (20) configured for adjusting an optical path length of the second optical path (P2);
   wherein the coupling port (14) is configured for optically coupling the second optical path (P2) with a laser processing module; and
   wherein the distance detection device (40) is configured for performing distance measurements based on an interference of laser light transmitted along the first optical path (P1) with laser light transmitted along the second optical path (P2).

12. A laser processing apparatus (1) comprising:

   a laser processing module (30) for laser-processing a workpiece (P) on a work field (37) using a work beam (W); and
   a measurement module (10) according to any of claims 1 to 10, wherein the measurement module (10) is optically coupled with the laser processing module (30) by the coupling port (14) thereof to receive and output laser light from and to the laser processing module (30) in the form of a measurement beam (M);
   wherein the laser processing module (30) comprises:

      an optical element (32) for reflecting one of the work beam (W) and the measurement beam (M) and for transmitting therethrough the other one of the work beam (W) and the measurement beam (M); and
      a deflection unit (34) for deflecting the work beam (W) and the measurement beam (M) to and from the workpiece (P) and/or the work field (37);
      wherein a work beam path and a measurement beam path are defined in the laser processing module (30) for the work beam (W) and the measurement beam (M) respectively, wherein the work beam path is defined such that the work beam (W) is reflected/transmitted by the optical element (32) towards the deflection unit (34) and deflected by the deflection unit (34) to the workpiece (P) and/or the work field (37),
      wherein the measurement beam (M) propagates in the measurement module (10) along the second optical path (P2) of the measurement module (10), wherein the measurement beam path is defined such that the measurement beam (M) propagates from the coupling port (14) of the measurement module (10) to the optical element (32) and to the deflection unit (34) and back to the coupling port (14), being transmitted/reflected by the optical element (32) to and from the deflection unit (34), being deflected by the deflection unit (34) to and from the workpiece (P) and/or the work field (37), and being reflected back at the workpiece (P) and/or the work field (37).

13. The laser processing apparatus (1) of claim 12, further comprising the distance detection device (40) of claim 9, wherein the distance detection device (40) is configured for determining variations in a distance between the workpiece (P) and/or work field (37) and the deflection unit (34) and/or for determining said distance (D) based on an interference of the measurement beam with laser light propagating in the measurement module (10) along the first optical path (P1) thereof.

14. The laser processing apparatus (1) of any of claims 12 to 13, wherein the laser processing module (30) comprises a work beam focusing device (36) for focusing the work beam (W), wherein the work beam focusing device (36) has a variable focal length and is preferably arranged in the work beam path between the optical element (32) and a source or input (38) of the work beam (W).

15. The laser processing apparatus (1) of any of claims 12 to 14, wherein the focusing device (18) of the measurement module (10) is configured for focusing the measuring beam (M) on the work field (37) and/or on the workpiece (P), in particular in a position correspondiong to a focus of the work beam (W).

**Fig. 1**

**Fig. 2**

**Fig. 3**

**Fig. 4**

**Fig. 5**

**Fig. 6**

**Fig. 7**

**Fig. 8**

**Fig. 9**

**Fig. 10**

**Fig. 11**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 20120114651 A
- US 20140263221 A1
- DE 102013008269 A
- US 2016059347 A1
- DE 102019001858 B3
- US 20200038954 A1
- US 20150230705 A1
- US 2006165350 A1
- US 2017276471 A1
- WO 2018078137 A1